# EUROPEAN PATENT APPLICATION

(11) **EP 4 772 084 A1**
(43) Date of publication of application: **08.07.2026**
(21) Application number: 24893097.6
(22) Date of filing: 17.10.2024
(51) Int. Cl.: A47J 31/44, A47J 31/52

(54) **CONTROL METHOD FOR BEVERAGE OUTPUT DEVICE, BEVERAGE OUTPUT DEVICE, AND STORAGE MEDIUM**

(30) Priority: 24.11.2023 CN 202311599086
(71) Applicant: Hubei Midea Refrigerator Co., Ltd., Jingzhou, Hubei 434000 (CN)
(72) Inventor: HUANG, Fanbin, Jingzhou, Hubei 434000 (CN); WU, Jirong, Jingzhou, Hubei 434000 (CN); LIU, Dongxian, Jingzhou, Hubei 434000 (CN); HUANG, Wei, Jingzhou, Hubei 434000 (CN); ZHOU, Ze, Jingzhou, Hubei 434000 (CN); SHEN, Fangdong, Jingzhou, Hubei 434000 (CN); LIU, Chuanlan, Jingzhou, Hubei 434000 (CN)
(74) Representative: Ran, Handong
(86) International application number: PCT/CN2024/125544
(87) International publication number: WO 2025/107938

(57) **Abstract**

The present application provides a control method for a beverage output device, a beverage output device, and a storage medium. The control method comprises: receiving a user instruction; a beverage output port moving downwards from an initial position; determining whether the beverage output port moves downwards to a target position; if yes, stopping the beverage output port from moving downwards; and in response to the step of stopping the beverage output port from moving downwards, on the basis of the user instruction, outputting first-type beverage ingredients and/or outputting second-type beverage ingredients to a container receiving a beverage, and in response to detecting that measurement information in the container meets a preset condition, stopping outputting the beverage ingredients. According to the control method of the present application, after the beverage output port is controlled to move downwards to the target position, beverage ingredients are output, and in response to detecting that the measurement information in the container meets the preset condition, the outputting of the beverage ingredients is automatically stopped, thereby avoiding splashing of the beverage ingredients while improving operation convenience.

## Description

### CROSS-REFERENCE TO RELATED APPLICATIONS

This application claims priority to Chinese Patent Application No. 202311599086X, filed on November 24, 2023, and entitled "CONTROL METHOD FOR BEVERAGE DISPENSING DEVICE, BEVERAGE DISPENSING DEVICE, AND STORAGE MEDIUM".

### TECHNICAL FIELD

The present disclosure relates to the technical field of beverage dispensing devices and control methods therefor, and in particular to a control method for a beverage dispensing device, a beverage dispensing device, and a storage medium.

### BACKGROUND

In the related art, in a case where a beverage dispensing device dispenses a first type of beverage ingredient and/or a second type of beverage ingredient, splashing of the first type of beverage ingredient and/or the second type of beverage ingredient may often occur. Therefore, how to reduce the splashing of the first type of beverage ingredient and/or the second type of beverage ingredient may be a technical problem that needs to be solved urgently at present.

### SUMMARY

In view of this, some embodiments of the present disclosure may provide a control method for a beverage dispensing device, a beverage dispensing device, and a storage medium, so as to solve the problem of splashing of a first type of beverage ingredient and/or a second type of beverage ingredient when the beverage dispensing device dispenses the first type of beverage ingredient and/or the second type of beverage ingredient in the related art.

In order to solve the technical problem mentioned above, some embodiments of the present disclosure may adopt a technical solution as follows: providing a control method for a beverage dispensing device. The control method may include: receiving a user instruction, the user instruction including a first instruction, a second instruction, and a third instruction, the first instruction being an instruction to dispense a first type of beverage ingredient, the second instruction being an instruction to dispense a second type of beverage ingredient, and the third instruction being an instruction to dispense the first type of beverage ingredient and the second type of beverage ingredient; moving a beverage outlet downward from an initial position; determining whether the beverage outlet has reached a target position during moving downward; stopping, in response to the beverage outlet having reached the target position, the beverage outlet from moving downward; dispensing, in response to the beverage outlet being stopped from moving downward, the first type of beverage ingredient and/or the second type of beverage ingredient into a beverage-receiving container based on the user instruction, and stopping, in response to detected detection information meeting a preset condition, the dispensing of the first type of beverage ingredient and/or the second type of beverage ingredient.

In some embodiments, the beverage dispensing device may include a carrying platform configured to carry the container, the beverage outlet may be located above the carrying platform, the beverage outlet may be defined with a movement track, the movement track may include a first end away from the carrying platform and a second end close to the carrying platform, the initial position may be located at the first end, and in a case where the beverage outlet moves downward from the initial position, the beverage outlet may move from the first end towards the second end.

In some embodiments, the beverage dispensing device may include a first sensing assembly located above the carrying platform, and the first sensing assembly may be relatively fixed to the beverage outlet and configured to move synchronously with the beverage outlet; determining whether the beverage outlet has reached the target position during moving downward, may include: emitting a first detection wave by the first sensing assembly; determining whether the first sensing assembly receives an echo of the first detection wave within a first preset time period; stopping, in response to the first sensing assembly receiving an echo of the first detection wave within the first preset time period, the beverage outlet from moving downward; maintaining, in response to the first sensing assembly not receiving an echo of the first detection wave within the first preset time period, a state of the beverage outlet moving downward, and returning to emit the first detection wave by the first sensing assembly.

In some embodiments, maintaining the state of the beverage outlet moving downward and emitting the first detection wave by the first sensing assembly, may include: maintaining the state of the beverage outlet moving downward; determining whether a time difference between a time point when the first detection wave was last emitted and a current time point reaches a second preset time period, the second preset time period being greater than or equal to the first preset time period; returning, in response to the time difference between the time point when the first detection wave was last emitted and the current time point reaching the second preset time period, to emit the first detection wave by the first sensing assembly; returning, in response to the time difference between the time point when the first detection wave was last emitted and the current time point not reaching the second preset time period, to determine whether the time difference between the time point when the first detection wave was last emitted and the current time point reaches the second preset time period.

In some embodiments, the second preset time period may be greater than or equal to a value obtained by dividing 2N times a distance between the initial position and the carrying platform by a speed of sound, and N may range from 1 to 1000.

In some embodiments, the beverage dispensing device may include a second sensing assembly located above the carrying platform, the second sensing assembly may be relatively fixed to the beverage outlet and configured to move synchronously with the beverage outlet, the second sensing assembly may include a triggering portion and a microswitch, and the triggering portion may be configured to trigger the microswitch when touching an opening edge of the container; determining whether the beverage outlet has reached the target position during moving downward, may include: determining whether the triggering portion triggers the microswitch; stopping, in response to the triggering portion triggering the microswitch, the beverage outlet from moving downward; maintaining, in response to the triggering portion not triggering the microswitch, the state of the beverage outlet moving downward, and returning to determine whether the triggering portion triggers the microswitch.

In some embodiments, the beverage dispensing device may include a third sensing assembly configured to move synchronously with the beverage outlet, two sides of the carrying platform of the beverage dispensing device may include a first side wall and a second side wall arranged opposite to each other, the third sensing assembly may include a second transmitting portion and a second receiving portion arranged opposite to each other, the second transmitting portion may be movably disposed on the first side wall, and the second receiving portion may be movably disposed on the second side wall; determining whether the beverage outlet has reached the target position during moving downward, may include: emitting a second detection wave by the second transmitting portion; determining whether the second receiving portion receives the second detection wave; maintaining, in response to the second receiving portion receiving the second detection wave, the state of the beverage outlet moving downward, and returning to emit the second detection wave by the second transmitting portion; stopping, in response to the second receiving portion not receiving the second detection wave, the beverage outlet from moving downward.

In some embodiments, the beverage dispensing device may include a fourth sensing assembly located above the carrying platform, and the fourth sensing assembly may be configured to determine whether the beverage outlet has moved down to the target position through image information and to detect the detection information.

In some embodiments, determining whether the beverage outlet has reached the target position during moving downward, may further include: determining, in response to the beverage outlet not having reached the target position during moving downward, whether the beverage outlet has reached the second end; stopping, in response to the beverage outlet having reached the second end, the beverage outlet from moving downward; maintaining, in response to the beverage outlet not having reached the second end, the state of the beverage outlet moving downward, and returning to determine whether the beverage outlet has reached the target position.

In some embodiments, the target position may include a position where a vertical distance between the beverage outlet and an opening edge of the container ranges from 0 cm to 60 cm.

In some embodiments, the detection information may include first information and/or second information; dispensing the first type of beverage ingredient and/or the second type of beverage ingredient into the beverage-receiving container based on the user instruction, and stopping, in response to detected detection information meeting the preset condition, the dispensing of the first type of beverage ingredient and/or the second type of beverage ingredient, may include: dispensing, in response to the user instruction being the first instruction, the first type of beverage ingredient based on the user instruction, and stopping, in response to detecting that the first information in the container meets a first preset condition, the dispensing of the first type of beverage ingredient; or dispensing, in response to the user instruction being the second instruction, the second type of beverage ingredient based on the user instruction, and stopping, in response to detecting that the second information in the container meets a second preset condition, the dispensing of the second type of beverage ingredient; or dispensing, in response to the user instruction being the third instruction, the first type of beverage ingredient based on the user instruction, and stopping, in response to detecting that the first information in the container meets the first preset condition, the dispensing of the first type of beverage ingredient; dispensing the second type of beverage ingredient based on the user instruction, and stopping, in response to detecting that the second information in the container meets the second preset condition, the dispensing of the second type of beverage ingredient.

In some embodiments, the first information may be a vertical distance between an opening edge of the container and a top of the first type of beverage ingredient, and the first preset condition may be that the vertical distance between the opening edge of the container and the top of the first type of beverage ingredient is less than or equal to a first preset value; the second information may be a vertical distance between the opening edge of the container and a liquid level of the second type of beverage ingredient, and the second preset condition may be that the vertical distance between the opening edge of the container and the liquid level of the second type of beverage ingredient is less than or equal to a second preset value; the first preset value may be greater than the second preset value.

In some embodiments, the beverage dispensing device may further include a water receiving box, the water receiving box may be disposed with a water level sensor and a prompt assembly, the water receiving box may be located under the carrying platform, and the prompt assembly may be configured to output prompt information; the control method may further include: determining, in response to the beverage outlet being stopped from moving downward, whether a water level in the water receiving box reaches a preset water level based on a detection signal obtained by the water level sensor; outputting, in response to the water level in the water receiving box reaching the preset water level, the prompt information by the prompt assembly; dispensing, in response to the water level in the water receiving box not reaching the preset water level, the first type of beverage ingredient and/or the second type of beverage ingredient into the beverage-receiving container based on the user instruction, and continuously determining whether the water level in the water receiving box reaches the preset water level based on the detection signal obtained by the water level sensor; stopping, in response to the water level in the water receiving box reaching the preset water level, the dispensing of the first type of beverage ingredient and/or the second type of beverage ingredient, and outputting the prompt information; or the control method may further include: determining, in response to receiving the user instruction, whether the water level in the water receiving box reaches the preset water level based on the detection signal obtained by the water level sensor; outputting, in response to the water level in the water receiving box reaching the preset water level, the prompt information by the prompt assembly; moving, in response to the water level in the water receiving box not reaching the preset water level, the beverage outlet downward from the initial position.

In some embodiments, the control method may further include: controlling, in response to stopping the dispensing of the first type of beverage ingredient and/or the second type of beverage ingredient, the beverage outlet to move toward the initial position.

In some embodiments, the control method may further include: determining, in response to receiving the user instruction, whether a presence of the container is detected on the carrying platform; moving, in response to the presence of the container being detected on the carrying platform, the beverage outlet downward from the initial position; stopping, in response to the presence of the container not being detected on the carrying platform, the beverage outlet from moving.

In some embodiments, the detection information may include a vertical distance between a top of a receiving object in the container and an opening edge of the container.

In order to solve the technical problem mentioned above, some embodiments of the present disclosure may adopt another technical solution as follows: providing a beverage dispensing device. The beverage dispensing device may include: an instruction receiving assembly, configured to receive a user instruction, the user instruction including a first instruction, a second instruction, and a third instruction, the first instruction being an instruction to dispense a first type of beverage ingredient, the second instruction being an instruction to dispense a second type of beverage ingredient, and the third instruction being an instruction to dispense the first type of beverage ingredient and the second type of beverage ingredient; a beverage outlet, configured to dispense a beverage into a container, the beverage including the first type of beverage ingredient and/or the second type of beverage ingredient; a moving assembly, connected to the beverage outlet and configured to move the beverage outlet; a detection assembly, configured to detect an opening edge of the container and detection information in the container; a processor, connected to the instruction receiving assembly, the moving assembly, and the detection assembly, and configured to execute any of the control methods for the beverage dispensing device mentioned above.

In some embodiments, the beverage dispensing device may further include a carrying platform, the carrying platform may be configured to carry the container, the beverage outlet may be located above the carrying platform, the beverage outlet may be defined with a movement track, and the movement track may include a first end away from the carrying platform and a second end close to the carrying platform.

In some embodiments, the detection assembly may include a first sensing assembly located above the carrying platform, the first sensing assembly may be relatively fixed to the beverage outlet and connected to the processor, and the first sensing assembly may be configured to move synchronously with the beverage outlet.

In some embodiments, the first sensing assembly may include an ultrasonic detector or a time-of-flight detector.

In some embodiments, the first sensing assembly may be configured to detect the opening edge of the container and the detection information in the container.

In some embodiments, the detection assembly may further include a second sensing assembly located above the carrying platform, the second sensing assembly may be relatively fixed to the beverage outlet and configured to move synchronously with the beverage outlet, the second sensing assembly may include a triggering portion and a microswitch, the triggering portion may be configured to trigger the microswitch when touching the opening edge of the container, and the microswitch may be connected to the processor.

In some embodiments, the second sensing assembly may be configured to detect the opening edge of the container, and the first sensing assembly may be configured to detect the detection information in the container.

In some embodiments, the detection assembly may further include a third sensing assembly configured to move synchronously with the beverage outlet, two sides of the carrying platform of the beverage dispensing device may include a first side wall and a second side wall arranged opposite to each other, the third sensing assembly may include a second transmitting portion and a second receiving portion arranged opposite to each other, the second transmitting portion may be movably disposed on the first side wall, the second receiving portion may be movably disposed on the second side wall, and the third sensing assembly may be connected to the processor.

In some embodiments, the third sensing assembly may include an infrared pair tube.

In some embodiments, the third sensing assembly may be configured to detect the opening edge of the container, and the first sensing assembly may be configured to detect the detection information in the container.

In some embodiments, the detection assembly may include a fourth sensing assembly located above the carrying platform, the fourth sensing assembly may be configured to detect the opening edge of the container and the detection information in the container through image information, and the fourth sensing assembly may be connected to the processor.

In some embodiments, the fourth sensing assembly may include a camera.

In some embodiments, the beverage dispensing device may further include: a first sleeve group, including at least two first sleeves sleeved in a hierarchical manner, an innermost first sleeve or an outermost first sleeve being fixedly disposed at the first end, and the other first sleeves being relatively movable along a first direction to achieve extension and retraction; a first sleeve fixedly disposed at the first end being a first fixed sleeve, a first sleeve farthest from the first fixed sleeve in the first sleeve group being a first moving sleeve, and the beverage outlet being located on the first moving sleeve; the first direction being a direction close to or away from the container.

In some embodiments, the first sleeve group may be defined with a delivery channel, and a bottom of the first moving sleeve may be defined with a first type of beverage ingredient outlet.

In some embodiments, in a case where the first sleeve group is in an extended state, an inner diameter of the delivery channel may gradually increase or decrease in a direction close to the beverage outlet.

In some embodiments, the beverage dispensing device may further include: a second sleeve group, sleeved outside the first sleeve group, the second sleeve group including at least two second sleeves sleeved in a hierarchical manner, an outermost second sleeve or an innermost second sleeve being fixedly disposed at the first end, and the other second sleeves being relatively movably disposed along the first direction; a second sleeve fixedly disposed at the first end being a second fixed sleeve, a second sleeve farthest from the second fixed sleeve in the second sleeve group being a second moving sleeve, and the second moving sleeve being relatively fixed to the first moving sleeve.

In some embodiments, the first sleeves and the second sleeves may be in one-to-one correspondence and relatively fixed.

In some embodiments, the beverage outlet may further include a second type of beverage ingredient outlet, the beverage dispensing device may further include a delivery pipe, an output end of the delivery pipe may form the second type of beverage ingredient outlet, and the output end and the first moving sleeve or the second moving sleeve.

In some embodiments, the beverage dispensing device may further include a water receiving box and a prompt assembly, the water receiving box may be disposed with a water level sensor, the water level sensor and the prompt assembly may be connected to the processor, the water receiving box may be located under the carrying platform, and the prompt assembly may be configured to output prompt information.

In order to solve the technical problem mentioned above, some embodiments of the present disclosure may adopt another technical solution as follows: providing a storage medium. The storage medium may be configured to store a program instruction, and the program instruction may be configured to be executed to implement any of the control methods for the beverage dispensing device mentioned above.

Technical effects of the embodiments of the present disclosure may be as follows. The control method for the beverage dispensing device may be provided. The control method for the beverage dispensing device may include: receiving the user instruction; moving the beverage outlet downward from the initial position; determining whether the beverage outlet has reached the target position during moving downward; in response to the beverage outlet having reached the target position, stopping the beverage outlet from moving downward; in response to the beverage outlet being stopped from moving downward, dispensing the first type of beverage ingredient and/or the second type of beverage ingredient into the beverage-receiving container based on the user instruction, and stopping the dispensing of the first type of beverage ingredient and/or the second type of beverage ingredient in response to the detected detection information in the container meeting the preset condition. In the control method for the beverage dispensing device of the present disclosure, after receiving the user instruction, the beverage outlet may be controlled to descend to the target position to dispense the first type of beverage ingredient and/or the second type of beverage ingredient. After detecting that the detection information in the container meets the preset condition, the dispensing of the first type of beverage ingredient and/or the second type of beverage ingredient may be automatically stopped, which may improve operational convenience and reduce splashing of the first type of beverage ingredient and/or the second type of beverage ingredient. In addition, the automatic stop may also prevent beverage overflow.

### BRIEF DESCRIPTION OF THE DRAWINGS

In order to describe the technical solutions of some embodiments of the present disclosure more clearly, a brief introduction may be given below to the drawings that are required in the description of the embodiments. It is apparent that the drawings described below merely illustrate some embodiments of the present disclosure. Other drawings may further be obtained by those skilled in the art without inventive effort based on these drawings.
FIG. 1 is a schematic flowchart of a control method for a beverage dispensing device according to some embodiments of the present disclosure.
FIG. 2 is a schematic view of detecting a distance to a top of a first type of beverage ingredient of the control method for the beverage dispensing device according to some embodiments of the present disclosure.
FIG. 3 is a schematic view of detecting a distance to a liquid level of a second type of beverage ingredient of the control method for the beverage dispensing device according to some embodiments of the present disclosure.
FIG. 4 is a schematic view of detecting the distance to the top of the first type of beverage ingredient and/or the distance to the liquid level of the second type of beverage ingredient of the control method for the beverage dispensing device according to some embodiments of the present disclosure.
FIG. 5 is a schematic flowchart of the control method for the beverage dispensing device according to some embodiments of the present disclosure.
FIG. 6 is a schematic flowchart of the control method for the beverage dispensing device according to some embodiments of the present disclosure.
FIG. 7 is a schematic flowchart of the control method for the beverage dispensing device according to some embodiments of the present disclosure.
FIG. 8 is a schematic view of detecting the distance to the top of the first type of beverage ingredient of the control method for the beverage dispensing device according to some embodiments of the present disclosure.
FIG. 9 is a schematic view of detecting the distance to the liquid level of the second type of beverage ingredient of the control method for the beverage dispensing device according to some embodiments of the present disclosure.
FIG. 10 is a schematic view of detecting the distance to the top of the first type of beverage ingredient and/or the distance to the liquid level of the second type of beverage ingredient of the control method for the beverage dispensing device according to some embodiments of the present disclosure.
FIG. 11 is a schematic view of detecting the distance to the top of the first type of beverage ingredient of the control method for the beverage dispensing device according to some embodiments of the present disclosure.
FIG. 12 is a schematic view of detecting the distance to the liquid level of the second type of beverage ingredient of the control method for the beverage dispensing device according to some embodiments of the present disclosure.
FIG. 13 is a schematic view of detecting the distance to the top of the first type of beverage ingredient and/or the distance to the liquid level of the second type of beverage ingredient of the control method for the beverage dispensing device according to some embodiments of the present disclosure.
FIG. 14 is a schematic flowchart of the control method for the beverage dispensing device according to some embodiments of the present disclosure.
FIG. 15 is a schematic view of detecting the distance to the top of the first type of beverage ingredient of the control method for the beverage dispensing device according to some embodiments of the present disclosure.
FIG. 16 is a schematic view of detecting the distance to the liquid level of the second type of beverage ingredient of the control method for the beverage dispensing device according to some embodiments of the present disclosure.
FIG. 17 is a schematic view of detecting the distance to the top of the first type of beverage ingredient and/or the distance to the liquid level of the second type of beverage ingredient of the control method for the beverage dispensing device according to some embodiments of the present disclosure.
FIG. 18 is a schematic view of detecting the distance to the top of the first type of beverage ingredient of the control method for the beverage dispensing device according to some embodiments of the present disclosure.
FIG. 19 is a schematic view of detecting the distance to the liquid level of the second type of beverage ingredient of the control method for the beverage dispensing device according to some embodiments of the present disclosure.
FIG. 20 is a schematic view of detecting the distance to the top of the first type of beverage ingredient and/or the distance to the liquid level of the second type of beverage ingredient of the control method for the beverage dispensing device according to some embodiments of the present disclosure.
FIG. 21 is a schematic flowchart of the control method for the beverage dispensing device according to some embodiments of the present disclosure.
FIG. 22 is a schematic structural view of a beverage dispensing device according to some embodiments of the present disclosure.
FIG. 23 is a schematic structural view of the beverage dispensing device according to some embodiments of the present disclosure.
FIG. 24 is a schematic view of a movement trajectory of the beverage dispensing device according to some embodiments of the present disclosure.
FIG. 25 is a schematic structural view of the beverage dispensing device according to some embodiments of the present disclosure.
FIG. 26 is a schematic structural view of the beverage dispensing device according to some embodiments of the present disclosure.
FIG. 27 is a schematic structural view of the beverage dispensing device according to some embodiments of the present disclosure.
FIG. 28 is a schematic structural view of the beverage dispensing device according to some embodiments of the present disclosure.

### DETAILED DESCRIPTION

In order to make the above purposes, features, and advantages of the present disclosure more obvious and understandable, the embodiments of the present disclosure may be described in detail below in conjunction with the accompanying drawings. It may be understood that the embodiments described herein may be only for explaining the present disclosure, but not for limiting the present disclosure. In addition, it should be noted that, for the convenience of description, only some structures related to the present disclosure may be shown in the accompanying drawings instead of all structures. Based on the embodiments in the present disclosure, all other embodiments obtained by those of ordinary skill in the art without inventive effort may be within the protection scope of the present disclosure.

Reference to the term "embodiment" herein may mean that a specific feature, structure, or characteristic described in conjunction with the embodiment may be included in at least one embodiment of the present disclosure. The appearance of the phrase at various positions in the specification may not necessarily refer to the same embodiment, nor may it be an independent or alternative embodiment mutually exclusive with other embodiments. Those skilled in the art may explicitly and implicitly understand that the embodiments described herein may be combined with other embodiments.

The present disclosure may provide a control method for a beverage dispensing device 20. The control method for the beverage dispensing device 20 may include: receiving a user instruction, the user instruction including a first instruction, a second instruction, and a third instruction, the first instruction being an instruction to dispense a first type of beverage ingredient, the second instruction being an instruction to dispense a second type of beverage ingredient, and the third instruction being an instruction to dispense the first type of beverage ingredient and the second type of beverage ingredient; moving a beverage outlet 22 downward from an initial position; determining whether the beverage outlet 22 has reached a target position during moving downward; in response to the beverage outlet 22 having reached the target position, stopping the beverage outlet 22 from moving downward; in response to the beverage outlet 22 being stopped from moving downward, dispensing the first type of beverage ingredient and/or the second type of beverage ingredient into a beverage-receiving container 26 based on the user instruction; and stopping the dispensing of the first type of beverage ingredient and/or the second type of beverage ingredient in response to detected detection information meeting a preset condition.

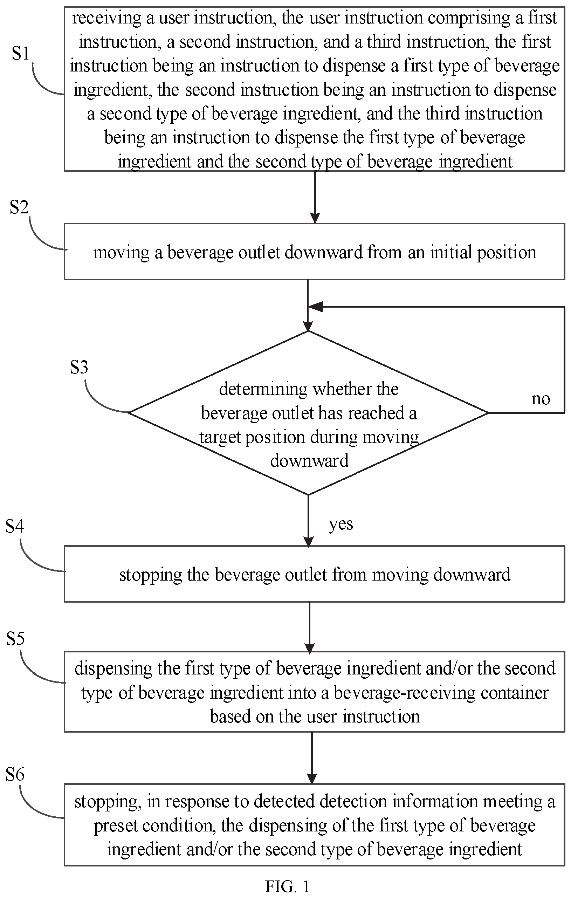

As shown in FIG. 1, the control method may include operations executed by the following blocks.

At block S1, the user instruction may be received, the user instruction may include the first instruction, the second instruction, and the third instruction, the first instruction may be an instruction to dispense the first type of beverage ingredient, the second instruction may be an instruction to dispense the second type of beverage ingredient, and the third instruction may be an instruction to dispense the first type of beverage ingredient and the second type of beverage ingredient.

A user may place the beverage-receiving container 26 into the beverage dispensing device 20. The beverage dispensing device 20 may receive the user instruction through human body induction or a switch signal. The user instruction may include an instruction to dispense the first type of beverage ingredient, an instruction to dispense the second type of beverage ingredient, and an instruction to dispense the first type of beverage ingredient and the second type of beverage ingredient. The instruction to dispense the first type of beverage ingredient and the second type of beverage ingredient may be an instruction to dispense the first type of beverage ingredient first and then the second type of beverage ingredient. A mixture of the first type of beverage ingredient and the second type of beverage ingredient may be obtained through one instruction without the user clicking or controlling a switch twice.

The first type of beverage ingredient may include an ingredient with a fixed shape, an elastic ingredient, and an ingredient with poor fluidity, such as an ice cube, a crushed ice, a red bean, a mung bean, a peanut, a pearl, coconut jelly, taro ball, and milk jelly in bubble tea, a jelly, a tortoise jelly, a fruit puree, a taro puree, an ice cream, a puffed food, a baked good, etc. The second type of beverage ingredient may include an ingredient with high fluidity, such as water, fruit juice, milk, coffee, cola, soybean milk, etc.

In some embodiments, the user instruction may include an instruction currently newly input by the user, such as the first instruction, the second instruction, and the third instruction. The user instruction may also include an instruction obtained based on a user habit, an instruction based on different time periods such as morning, noon, and evening, an instruction based on different seasons, and an instruction based on different ambient temperatures.

At block S2, the beverage outlet 22 may be moved downward from the initial position.

After receiving the user instruction, the beverage outlet 22 may be descended from the initial position. The beverage outlet 22 may be descended to close to an opening edge of the container 26, preventing the beverage outlet 22 from being too high above the opening edge of the container 26 and causing the first type of beverage ingredient and/or the second type of beverage ingredient to splash.

At block S3, whether the beverage outlet 22 has reached the target position during moving downward may be determined.

The beverage outlet 22 may be moved downward from the initial position to find a suitable position for dispensing the first type of beverage ingredient and/or the second type of beverage ingredient, so as to prevent the beverage outlet 22 from being too high above the opening edge of the container 26 and causing the first type of beverage ingredient and/or the second type of beverage ingredient to splash. Meanwhile, the position may also allow the opening edge of the container 26 and a top of the first type of beverage ingredient in the container 26 and/or a liquid level of the second type of beverage ingredient in the container 26 to be within a sensing range of a sensing assembly, so as to reduce poor detection caused by any of the opening edge of the container 26 and a top of the first type of beverage ingredient in the container 26 and/or a liquid level of the second type of beverage ingredient in the container 26 being located in a blind area. The target position may be a suitable position for dispensing the first type of beverage ingredient and/or the second type of beverage ingredient and for detection. In a case where it is determined that the beverage outlet 22 has not reached the target position during moving downward, it may indicate that a distance between the beverage outlet 22 and the opening edge of the container 26 is still too large and/or at least one of the opening edge and the top of the first type of beverage ingredient in the container 26 and/or the liquid level of the second type of beverage ingredient in the container 26 is outside the sensing range of the sensing assembly. In order to reduce splashing of the first type of beverage ingredient and/or the second type of beverage ingredient and poor detection, the beverage outlet 22 may need to continue moving downward.

The target position may include a position where a vertical distance between the beverage outlet 22 and the opening edge of the container 26 ranges from 0 cm to 60 cm. The vertical distance may be 0 cm, 4 cm, 5.6 cm, 10 cm, 14.6 cm, 17.6 cm, 25.6 cm, 27.1 cm, 29.8 cm, 36 cm, 44 cm, 57 cm, 60 cm. In a case where the beverage dispensing device 20 is a household device, the target position may be a position where the vertical distance between the beverage outlet 22 and the opening edge of the container 26 ranges from 0 cm to 40 cm. In a case where the beverage dispensing device 20 is a commercial device, the target position may be a position where the vertical distance between the beverage outlet 22 and the opening edge of the container 26 ranges from 0 cm to 60 cm.

At block S4, in response to the beverage outlet 22 having reached the target position, the beverage outlet 22 may be stopped from moving downward.

In a case where it is determined that the beverage outlet 22 has reached the target position during moving downward, the distance between the beverage outlet 22 and the opening edge of the container 26 at this time may be a suitable distance for dispensing the first type of beverage ingredient and/or the second type of beverage ingredient, which may reduce the probability of splashing of the first type of beverage ingredient and/or the second type of beverage ingredient. At this time, the beverage outlet 22 may be stopped from moving downward.

At block S5, in response to the beverage outlet 22 being stopped from moving downward, the first type of beverage ingredient and/or the second type of beverage ingredient may be dispensed into the beverage-receiving container 26 based on the user instruction.

After the beverage outlet 22 stops moving downward, the beverage dispensing device 20 may dispense the first type of beverage ingredient and/or the second type of beverage ingredient into the container 26 based on the user instruction at block S1.

At block S6, in response to the detected detection information meeting the preset condition, the dispensing of the first type of beverage ingredient and/or the second type of beverage ingredient may be stopped.

In a case where it is detected that a vertical distance between the opening edge of the container 26 and the top of the first type of beverage ingredient and/or the liquid level of the second type of beverage ingredient meets the preset condition, the dispensing of the first type of beverage ingredient and/or the second type of beverage ingredient may be stopped. In the embodiments, by setting the preset condition, after detecting that the detection information in the container 26 meets the preset condition, the dispensing of the first type of beverage ingredient and/or the second type of beverage ingredient may be automatically stopped, which may prevent beverage overflow and improve operational convenience. The preset condition may be obtained through data statistics or experience. By comparing the detection information with the preset condition, the dispensing of the first type of beverage ingredient and/or the second type of beverage ingredient may be stopped in a timely manner to reduce beverage splashing or overflow. The method of stopping the dispensing of the first type of beverage ingredient and/or the second type of beverage ingredient may include the following methods.

The detection information may include first information and/or second information. The first information may be information about the top of the first type of beverage ingredient, that is, a vertical distance between the opening edge of the container 26 and the top of the first type of beverage ingredient. In a case where it is detected that the vertical distance between the opening edge of the container 26 and the top of the first type of beverage ingredient meets the preset condition, the dispensing of the first type of beverage ingredient may be stopped. The second information may be information about the liquid level of the second type of beverage ingredient, that is, a vertical distance between the opening edge of the container 26 and the liquid level of the second type of beverage ingredient. In a case where it is detected that the vertical distance between the opening edge of the container 26 and the liquid level of the second type of beverage ingredient meets the preset condition, the dispensing of the second type of beverage ingredient may be stopped.

Method 1: in response to the user instruction being the first instruction, the first type of beverage ingredient may be dispensed based on the user instruction, and in response to detecting that the first information in the container 26 meets a first preset condition, the dispensing of the first type of beverage ingredient may be stopped.

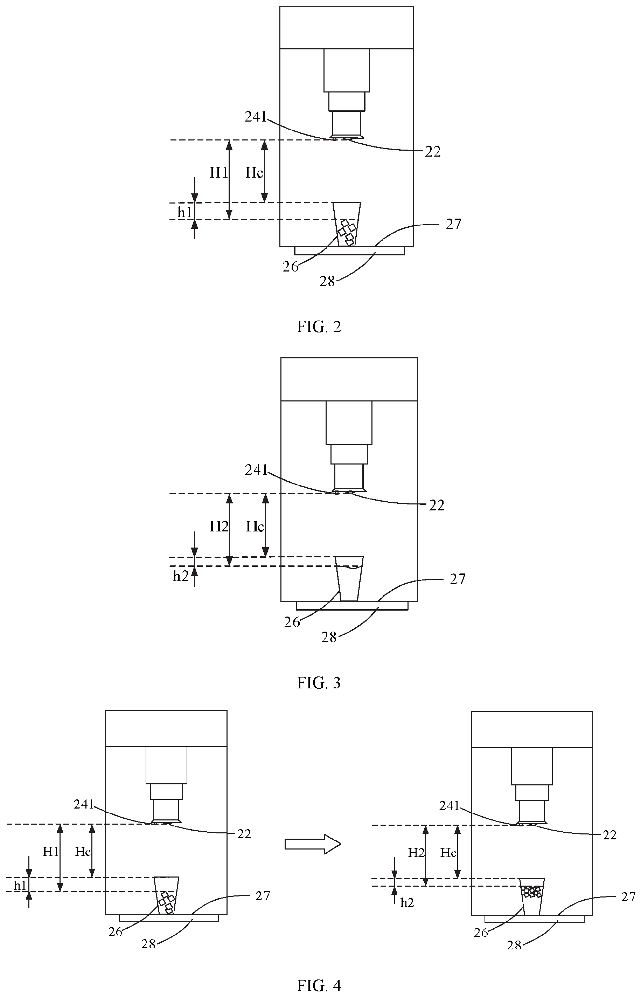

As shown in FIG. 2, the beverage dispensing device 20 may detect a distance Hc, where the distance Hc may be the vertical distance between the beverage outlet 22 and the opening edge of the container 26. A distance between the beverage outlet 22 and the top of the first type of beverage ingredient when stopping the dispensing of the first type of beverage ingredient may be Hc + h1. h1 may be a minimum vertical distance between the opening edge and the top of the first type of beverage ingredient in a case where the first type of beverage ingredient may not splash out of the container 26. h1 may be obtained through data statistics or experience. In a case where the first type of beverage ingredient is dispensed based on the user instruction, the beverage dispensing device 20 may detect and confirm a vertical distance H1 between the beverage outlet 22 and the top of the first type of beverage ingredient in real time. In a case where it is determined that H1 - Hc > h1, the dispensing of the first type of beverage ingredient may be continued. In a case where it is determined that H1 - Hc ≤ h1, it may indicate that the first type of beverage ingredient may splash if the first type of beverage ingredient is continuously added, and at this time, the dispensing of the first type of beverage ingredient may be stopped. The first information meeting the first preset condition may be H1 - Hc ≤ h1 being satisfied.

Method 2: in response to the user instruction being the second instruction, the second type of beverage ingredient may be dispensed based on the user instruction, and in response to detecting that the second information in the container 26 meets a second preset condition, the dispensing of the second type of beverage ingredient may be stopped.

As shown in FIG. 3, the beverage dispensing device 20 may detect a distance Hc, where the distance Hc may be the vertical distance between the beverage outlet 22 and the opening edge of the container 26. A distance between the beverage outlet 22 and the liquid level of the second type of beverage ingredient when stopping the dispensing of the second type of beverage ingredient may be Hc + h2. h2 may be a minimum vertical distance between the opening edge and the liquid level of the second type of beverage ingredient in a case where the second type of beverage ingredient may not splash out of the container 26. h2 may be obtained through data statistics or experience. In a case where the second type of beverage ingredient is dispensed based on the user instruction, the beverage dispensing device 20 may detect and confirm a vertical distance H2 between the beverage outlet 22 and the liquid level of the second type of beverage ingredient in real time. In a case where it is determined that H2 - Hc > h2, the dispensing of the second type of beverage ingredient may be continued. In a case where it is determined that H2 - Hc ≤ h2, it may indicate that the second type of beverage ingredient may splash if the second type of beverage ingredient is continuously added, and at this time, the dispensing of the second type of beverage ingredient may be stopped. The second information meeting the second preset condition may be H2 - Hc ≤ h2 being satisfied.

Method 3: in response to the user instruction being the third instruction, the first type of beverage ingredient may be dispensed based on the user instruction, and in response to detecting that the first information in the container 26 meets the first preset condition, the dispensing of the first type of beverage ingredient may be stopped; the second type of beverage ingredient may be dispensed based on the user instruction, and in response to detecting that the second information in the container 26 meets the second preset condition, the dispensing of the second type of beverage ingredient may be stopped.

As shown in FIG. 4, in response to the user instruction being the third instruction, the first type of beverage ingredient may be dispensed first. The beverage dispensing device 20 may detect a distance Hc, where the distance Hc may be the vertical distance between the beverage outlet 22 and the opening edge of the container 26. The distance between the beverage outlet 22 and the top of the first type of beverage ingredient when stopping the dispensing of the first type of beverage ingredient may be Hc + h1. h1 may be the minimum vertical distance between the opening edge and the top of the first type of beverage ingredient in a case where the first type of beverage ingredient may not splash out of the container 26. h1 may be obtained through data statistics or experience. In a case where the first type of beverage ingredient is dispensed based on the user instruction, the beverage dispensing device 20 may detect and confirm the vertical distance H1 between the beverage outlet 22 and the top of the first type of beverage ingredient in real time. In a case where it is determined that H1 - Hc > h1, the dispensing of the first type of beverage ingredient may be continued. In a case where it is determined that H1 - Hc ≤ h1, it may indicate that the first type of beverage ingredient may splash if the first type of beverage ingredient is continuously added, and at this time, the dispensing of the first type of beverage ingredient may be stopped. The first information meeting the first preset condition may be H1 - Hc ≤ h1 being satisfied.

After the dispensing of the first type of beverage ingredient is completed, the second type of beverage ingredient may be dispensed. The distance between the beverage outlet 22 and the liquid level of the second type of beverage ingredient when stopping the dispensing of the second type of beverage ingredient may be Hc + h2. h2 may be the minimum vertical distance between the opening edge and the liquid level of the second type of beverage ingredient in a case where the second type of beverage ingredient may not splash out of the container 26. h2 may be obtained through data statistics or experience. In a case where the second type of beverage ingredient is dispensed based on the user instruction, the beverage dispensing device 20 may detect and confirm the vertical distance H2 between the beverage outlet 22 and the liquid level of the second type of beverage ingredient in real time. In a case where it is determined that H2 - Hc > h2, the dispensing of the second type of beverage ingredient may be continued. In a case where it is determined that H2 - Hc ≤ h2, it may indicate that the second type of beverage ingredient may splash if the second type of beverage ingredient is continuously added, and at this time, the dispensing of the second type of beverage ingredient may be stopped. The second information meeting the second preset condition may be H2 - Hc ≤ h2 being satisfied.

It should be noted that dispensing the first type of beverage ingredient first and then the second type of beverage ingredient may prevent the first type of beverage ingredient and/or the second type of beverage ingredient from splashing. In other embodiments, the second type of beverage ingredient may be dispensed first and then the first type of beverage ingredient.

Based on the embodiments of the present disclosure, the first information may be the vertical distance between the opening edge of the container 26 and the top of the first type of beverage ingredient. The first preset condition may be that the vertical distance between the opening edge of the container 26 and the top of the first type of beverage ingredient is less than or equal to a first preset value. The second information may be the vertical distance between the opening edge of the container 26 and the liquid level of the second type of beverage ingredient. The second preset condition may be that the vertical distance between the opening edge of the container 26 and the liquid level of the second type of beverage ingredient is less than or equal to a second preset value. The first preset value may be greater than the second preset value. The first preset value may be 3 cm, 5 cm, 8 cm, 10 cm, 15 cm, etc. The second preset value may be 1 cm, 2 cm, 4 cm, 5 cm, 7 cm, etc. The first information may be the vertical distance between the opening edge of the container 26 and the top of the first type of beverage ingredient, that is, H1 - Hc. The first preset condition may be H1 - Hc ≤ the first preset value, that is, in a case where the vertical distance between the opening edge of the container 26 and the top of the first type of beverage ingredient is less than or equal to the first preset value, the dispensing of the first type of beverage ingredient may be stopped. The second information may be the vertical distance between the opening edge of the container 26 and the liquid level of the second type of beverage ingredient, that is, H2 - Hc. The second preset condition may be H2 - Hc ≤ the second preset value, that is, in a case where the vertical distance between the opening edge of the container 26 and the liquid level of the second type of beverage ingredient is less than or equal to the second preset value, the dispensing of the second type of beverage ingredient may be stopped. It should be noted that in other embodiments, the first preset condition may not be limited to the vertical distance between the opening edge of the container 26 and the top of the first type of beverage ingredient being less than or equal to the first preset value, and the second preset condition may not be limited to the vertical distance between the opening edge of the container 26 and the liquid level of the second type of beverage ingredient being less than or equal to the second preset value, but the vertical distance between the opening edge of the container 26 and the top of the first type of beverage ingredient or the vertical distance between the opening edge of the container 26 and the liquid level of the second type of beverage ingredient may also be less than other distances, which is not limited herein.

Based on the embodiments of the present disclosure, the beverage dispensing device 20 may be disposed with a carrying platform 27. The carrying platform 27 may be configured to carry the container 26. The beverage outlet 22 may be located above the carrying platform 27. The beverage outlet 22 may be defined with a movement track. The movement track may include a first end away from the carrying platform 27 and a second end close to the carrying platform 27. The initial position may be located at the first end. In the operation of moving the beverage outlet 22 downward from the initial position, the beverage outlet 22 may move from the first end towards the second end.

The beverage outlet 22 of the beverage dispensing device 20 may be located above the carrying platform 27. The initial position of the beverage outlet 22 may be the first end. A position where the beverage outlet 22 may move down to be closest to the carrying platform 27 may be the second end. The second end may be a lowest limit position that the beverage outlet 22 may move down to. In a case where the opening edge of the container 26 is low, the second end may be the target position for the beverage outlet 22 to dispense the first type of beverage ingredient and/or the second type of beverage ingredient. A distance between the second end and the opening edge of the container 26 may be relatively appropriate, which may reduce splashing of the first type of beverage ingredient and/or the second type of beverage ingredient. In a case where the opening edge of the container 26 is relatively high, the beverage outlet 22 may not need to move down to the lowest limit position. That is, after the beverage outlet 22 reaches the second end, it is detected that the distance between the beverage outlet 22 and the opening edge of the container 26 is too close, and the beverage outlet 22 may retreat to the target position to dispense the first type of beverage ingredient and/or the second type of beverage ingredient, where the target position may be higher than the second end.

Based on the embodiments of the present disclosure, the operation of determining whether the beverage outlet 22 has reached the target position during moving downward at block S3 may include: in response to the beverage outlet 22 not having reached the target position, determining whether the beverage outlet 22 has reached the second end; in response to the beverage outlet 22 having reached the second end, executing the operation of stopping the beverage outlet 22 from moving downward; in response to the beverage outlet 22 not having reached the second end, maintaining a state of the beverage outlet 22 moving downward, and returning to execute the operation of determining whether the beverage outlet 22 has reached the target position.

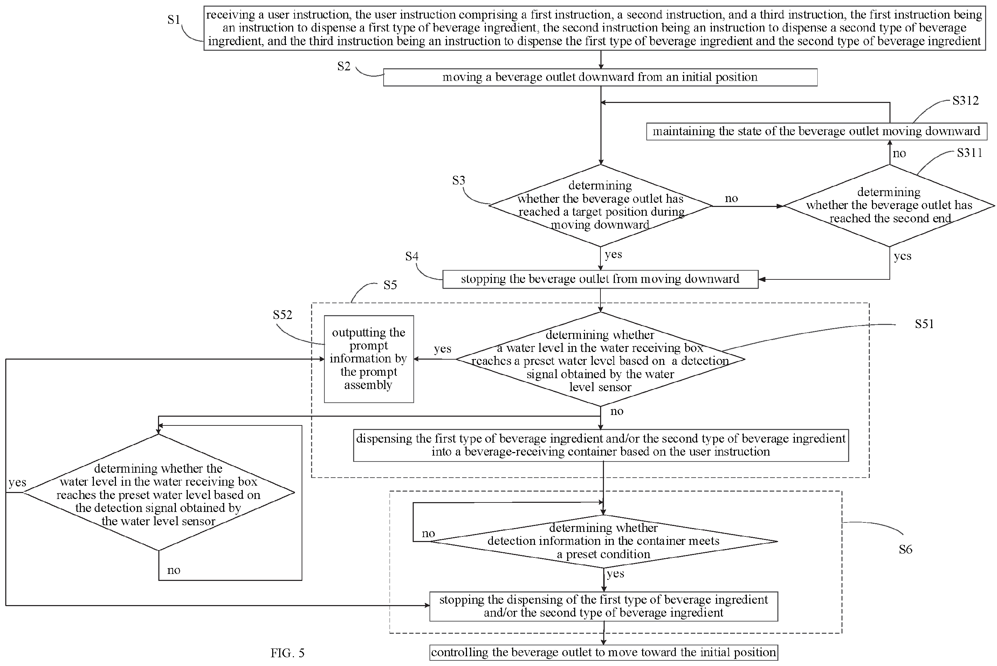

As shown in FIG. 5, in some embodiments, the operation of determining whether the beverage outlet 22 has reached the target position during moving downward at block S3 may further include operations executed by the following blocks.

At block S311, in response to the beverage outlet 22 not having reached the target position, whether the beverage outlet 22 has reached the second end may be determined.

In a case where it is determined that the beverage outlet 22 has not reached the target position after continuously moving downward, it may be necessary to determine whether the beverage outlet 22 has reached the second end. The target position may be the suitable position for dispensing the first type of beverage ingredient and/or the second type of beverage ingredient, which may prevent the beverage outlet 22 from being too high above the opening edge of the container 26 and causing the first type of beverage ingredient and/or the second type of beverage ingredient to splash. The second end may be the lowest position that the beverage outlet 22 may move down to.

In response to the beverage outlet 22 having reached the second end, the operation of stopping the beverage outlet 22 from moving downward may be executed.

In a case where it is determined that the beverage outlet 22 has reached the second end after moving downward, the beverage outlet 22 may have moved down to the lowest limit position at this time, and the operation of stopping the beverage outlet 22 from moving downward at block S4 may be executed.

At block S312, in response to the beverage outlet 22 not having reached the second end, the state of the beverage outlet 22 moving downward may be maintained, and the operation of determining whether the beverage outlet 22 has reached the target position at block S3 may be returned to and executed.

In a case where it is determined that the beverage outlet 22 has not reached the second end after moving downward, the state of the beverage outlet 22 moving downward may be maintained, and the operation of determining whether the beverage outlet 22 has reached the target position at block S3 may be returned to and executed.

Based on the embodiments of the present disclosure, the beverage dispensing device 20 may be disposed with a first sensing assembly 241. The first sensing assembly 241 may be located above the carrying platform 27. The first sensing assembly 241 may be relatively fixed to the beverage outlet 22. The first sensing assembly 241 may be configured to move synchronously with the beverage outlet 22. The operation of determining whether the beverage outlet 22 has reached the target position during moving downward may include: emitting a first detection wave by the first sensing assembly 241; determining whether the first sensing assembly 241 receives an echo of the first detection wave within a first preset time period; in response to the first sensing assembly 241 receiving an echo of the first detection wave within the first preset time period, executing the operation of stopping the beverage outlet 22 from moving downward; in response to the first sensing assembly 241 not receiving an echo of the first detection wave within the first preset time period, maintaining the state of the beverage outlet 22 moving downward, and returning to execute the operation of emitting the first detection wave by the first sensing assembly 241.

The first sensing assembly 241 may be relatively fixed to the beverage outlet 22. That is, during a synchronous movement of the first sensing assembly 241 and the beverage outlet 22, a relative positional relationship between the first sensing assembly 241 and the beverage outlet 22 may remain unchanged.

The beverage dispensing device 20 may further include the first sensing assembly 241. The first sensing assembly 241 may be located above the carrying platform 27 and fixedly disposed relative to the beverage outlet 22. The first sensing assembly 241 may be disposed on an outer periphery of the beverage outlet 22. A position where the first sensing assembly 241 is disposed may be determined based on an actual usage scenario. In a case where the beverage outlet 22 moves downward, the first sensing assembly 241 may descend synchronously. The beverage dispensing device 20 may detect the distance between the beverage outlet 22 and the opening edge of the container 26, as well as the distance between the beverage outlet 22 and the top of the first type of beverage ingredient in the container 26 or the liquid level of the second type of beverage ingredient in the container 26, via the first sensing assembly 241. The synchronous movement of the first sensing assembly 241 and the beverage outlet 22 may place the first sensing assembly 241 at a suitable position where the first sensing assembly 241 may detect the opening edge of the container 26 and the detection information in the container 26. That is, the opening edge of the container 26 and the top of the first type of beverage ingredient in the container 26 and/or the liquid level of the second type of beverage ingredient in the container 26 may be within a detection range of the first sensing assembly 241, avoiding any one of the opening edge of the container 26 and the top of the first type of beverage ingredient in the container 26 and/or the liquid level of the second type of beverage ingredient in the container 26 being in a blind area of the first sensing assembly 241.

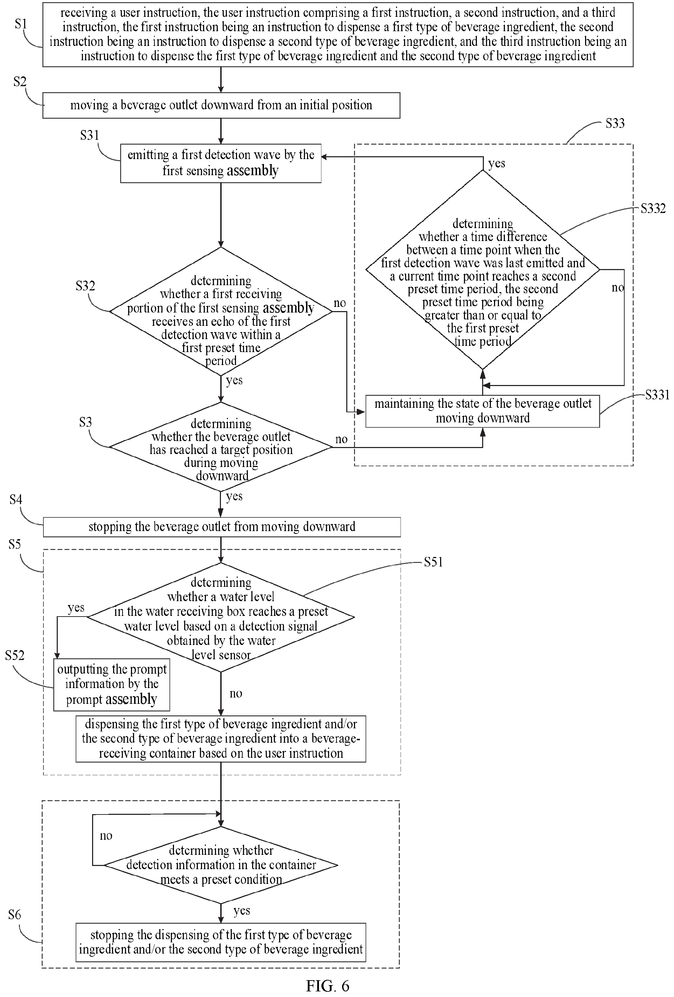

As shown in FIG. 6, the operation of determining whether the beverage outlet 22 has reached the target position during moving downward at block S3 may further include operations executed by the following blocks.

At block S31, the first detection wave may be emitted by the first sensing assembly 241.

The beverage dispensing device 20 may control the first sensing assembly 241 to emit a first detection wave to detect the distance between the beverage outlet 22 and the opening edge of the container 26. The first detection wave may be emitted in real time, at intervals, or after being triggered in other ways.

At block S32, whether the first sensing assembly 241 receives an echo of the first detection wave within the first preset time period may be determined.

After emitting the first detection wave, the first sensing assembly 241 may receive the echo of the first detection wave. During a process of the beverage outlet 22 moving downward, the distance between the beverage outlet 22 and the opening edge of the container 26 may be different, and an intensity and time of the echo of the first detection wave received by the first sensing assembly 241 may also be different. A formula for calculating the time in a case where the first sensing assembly 241 receives the echo of the first detection wave may be t = 2Sₜ/V. Sₜ may be the distance between the beverage outlet 22 and the opening edge of the container 26. V may be a propagation speed of the detection wave of the first sensing assembly 241 in the air. In a case where the first sensing assembly 241 receives the echo of the first detection wave within the first preset time period, it may indicate that the opening edge of the container 26 is within the sensing range of the first sensing assembly 241. Meanwhile, in a case where the container 26 contains the first type of beverage ingredient and/or the second type of beverage ingredient, the top of the first type of beverage ingredient and/or the liquid level of the second type of beverage ingredient may be located within the opening edge of the container 26 when observed from a top view. Therefore, in a case where the container 26 contains the first type of beverage ingredient and/or the second type of beverage ingredient, the top of the first type of beverage ingredient and/or the liquid level of the second type of beverage ingredient may also be within the sensing range of the first sensing assembly 241.

In response to the first sensing assembly 241 receiving an echo of the first detection wave within the first preset time period, the operation of stopping the beverage outlet 22 from moving downward at block S4 may be executed.

In response to the echo of the first detection wave being received within the first preset time period, it may indicate that the first sensing assembly 241 is located at a suitable position where the first sensing assembly 241 may detect the opening edge of the container 26 and the detection information in the container 26, and the beverage outlet 22 may be stopped from moving downward at this time.

At block S33, in response to the first sensing assembly 241 not receiving an echo of the first detection wave within the first preset time period, the state of the beverage outlet 22 moving downward may be maintained, and the operation of emitting the first detection wave by the first sensing assembly 241 at block S31 may be returned to and executed.

In response to the echo of the first detection wave not being received within the first preset time period, it may indicate that the first sensing assembly 241 has not moved down to a suitable position where the first sensing assembly 241 may detect the opening edge of the container 26 and the detection information in the container 26. The state of the beverage outlet 22 moving downward may be maintained, and the first sensing assembly 241 may emit the first detection wave to continue the detection.

Based on the embodiments of the present disclosure, as shown in FIG. 6, the operation of maintaining the state of the beverage outlet 22 moving downward and returning to execute the operation of emitting the first detection wave by the first sensing assembly 241 at block S33 may include: maintaining the state of the beverage outlet 22 moving downward; determining whether a time difference between a time point when the first detection wave was last emitted and a current time point reaches a second preset time period, the second preset time period being greater than or equal to the first preset time period; in response to the time difference between the time point when the first detection wave was last emitted and the current time point reaching the second preset time period, returning to execute the operation of emitting the first detection wave by the first sensing assembly 241; in response to the time difference between the time point when the first detection wave was last emitted and the current time point not reaching the second preset time period, returning to execute the operation of determining whether the time difference between the time point when the first detection wave was last emitted and the current time point reaches the second preset time period.

As shown in FIG. 6, in some embodiments, the operation of maintaining the state of the beverage outlet 22 moving downward and returning to execute the operation of emitting the first detection wave by the first sensing assembly 241 at block S33 may further include operations executed by the following blocks.

At block S331, the state of the beverage outlet 22 moving downward may be maintained.

In a case where the echo of the first detection wave is not received within the first preset time period, it may indicate that the distance between the beverage outlet 22 and the opening edge of the container 26 is still relatively far. In order to make the opening edge of the container 26 and the top of the first type of beverage ingredient in the container 26 and/or the liquid level of the second type of beverage ingredient in the container 26 be within the detection range of the first sensing assembly 241, and avoid any one of the opening edge of the container 26 and the top of the first type of beverage ingredient in the container 26 and/or the liquid level of the second type of beverage ingredient in the container 26 being in the blind area of the first sensing assembly 241, the state of the beverage outlet 22 moving downward may be maintained.

At block S332, whether the time difference between the time point when the first detection wave was last emitted and the current time point reaches the second preset time period may be determined, and the second preset time period may be greater than or equal to the first preset time period.

The first sensing assembly 241 may be controlled to emit the first detection wave at a predetermined time interval. The predetermined time interval may be the time difference between the time point when the first detection wave was last emitted and the current time point. It may be determined whether the predetermined time interval reaches the second preset time period to control whether the first sensing assembly 241 needs to emit the first detection wave at the current time point. The second preset time period may be greater than or equal to the first preset time period.

The second preset time period may be greater than or equal to a value obtained by dividing 2N times a distance between the initial position and the carrying platform 27 by a speed of sound. N may range from 1 to 1000. Alternatively, N may range from 5 to 100. The distance between the initial position and the carrying platform 27 may be obtained based on an actual structure of the beverage dispensing device 20. N may be any value between 1 to 1000, such as 1, 5, 68, 100, 198, 280, 374, 498, 500, 680, 750, 830, 980, 1000, etc. By limiting the value of N, the second preset time period being greater than or equal to the value obtained by dividing 2N times the distance between the initial position and the carrying platform 27 by the speed of sound may effectively control an interval time between two adjacent emissions of the first detection wave, thereby eliminating the interference caused by an echo signal generated by a previously emitted first detection wave on an echo signal generated by a later emitted first detection wave. That is, the later first detection wave may be emitted after the intensity of the echo signal generated by the previously emitted first detection wave is sufficiently weak, so as to reduce the interference on the echo signal generated by the later emitted first detection wave.

The distance between the initial position and the carrying platform 27 may be S. In a case where the beverage outlet 22 is located at the initial position, a time t₁ between a time point when the first sensing assembly 241 emits the first detection wave and a time point when the echo of the first detection wave is received may be t₁ = 2S/V. V may be the propagation speed of the detection wave of the first sensing assembly 241 in the air. The second preset time period t₂ of the embodiments may be t₂ ≥ N×t₁.

The emission of the first detection wave and the reception of the echo by the first sensing assembly 241 may form a cycle. In a case where the distance S between the initial position and the carrying platform 27 is 20 cm, a time duration between the first sensing assembly 241 emitting the first detection wave and receiving the echo may be less than 0.002 seconds. In a case where the time interval between two adjacent emissions of the first detection wave is relatively short, an echo signal received by the first sensing assembly 241 at a certain time point may be an echo signal generated by the first detection wave emitted in previous cycles hitting other objects at a distance greater than 20 cm, and the signal may interfere with an echo signal that needs to be received this time. Therefore, in order to avoid the interference, the embodiments may control the first sensing assembly 241 to emit a next first detection wave after extending the cycle to N times, so as to lengthen a time interval from an emission of a previous first detection wave. That is, the time difference between the time point when the first detection wave was last emitted and the current time point may need to reach the second preset time period t₂, and the second preset time period t₂ may be t₂ ≥ N×t₁.

In response to the time difference between the time point when the first detection wave was last emitted and the current time point reaching the second preset time period, the operation of emitting the first detection wave by the first sensing assembly 241 at block S31 may be returned to and executed.

In response to the predetermined time interval reaching the second preset time period, the first sensing assembly 241 may be controlled to emit the first detection wave.

In response to the time difference between the time point when the first detection wave was last emitted and the current time point not reaching the second preset time period, the operation of determining whether the time difference between the time point when the first detection wave was last emitted and the current time point reaches the second preset time period at block S332 may be returned to and executed.

In response to the predetermined time interval not reaching the second preset time period, the operation at block S332 may be returned to and executed.

Based on the embodiments of the present disclosure, the beverage dispensing device 20 may be disposed with a second sensing assembly 242. The second sensing assembly 242 may be located above the carrying platform 27. The second sensing assembly 242 may be relatively fixed to the beverage outlet 22. The second sensing assembly 242 may be configured to move synchronously with the beverage outlet 22. The second sensing assembly 242 may include a triggering portion 2421 and a microswitch 2422. The triggering portion 2421 may be configured to trigger the microswitch 2422 in a case where touching the opening edge of the container 26. The operation of determining whether the beverage outlet 22 has reached the target position during moving downward may include: determining whether the triggering portion 2421 triggers the microswitch 2422; in response to the triggering portion 2421 triggering the microswitch 2422, executing the operation of stopping the beverage outlet 22 from moving downward; in response to the triggering portion 2421 not triggering the microswitch 2422, maintaining the state of the beverage outlet 22 moving downward, and returning to execute the operation of determining whether the triggering portion 2421 triggers the microswitch 2422.

The second sensing assembly 242 may be relatively fixed to the beverage outlet 22. That is, during a synchronous movement of the second sensing assembly 242 and the beverage outlet 22, a relative positional relationship between the second sensing assembly 242 and the beverage outlet 22 may remain unchanged.

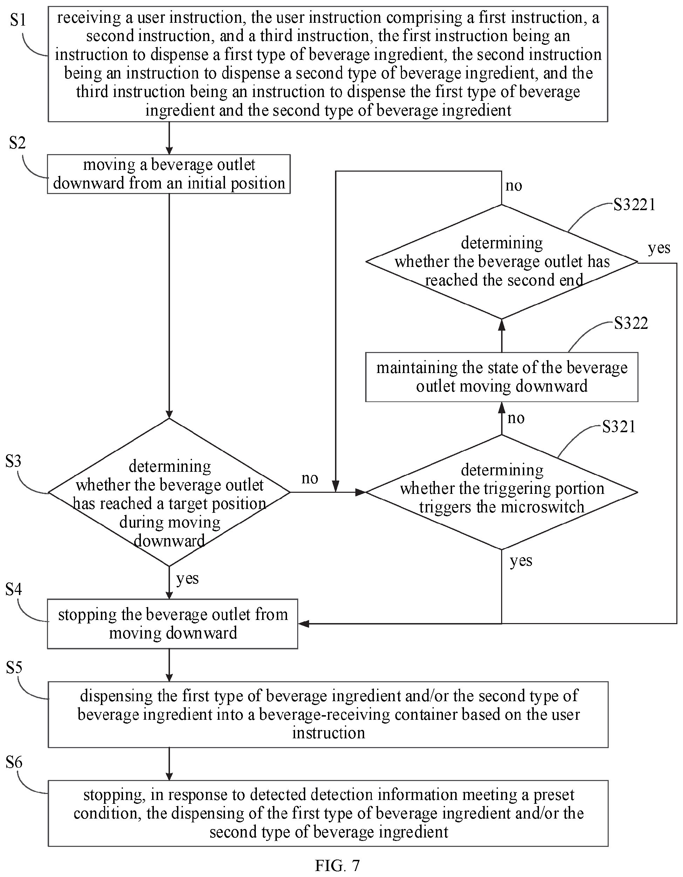

As shown in FIG. 7, in the embodiments, the beverage dispensing device 20 may include the second sensing assembly 242. The second sensing assembly 242 may be located above the carrying platform 27 and fixedly disposed relative to the beverage outlet 22. In a case where the beverage outlet 22 moves downward, the second sensing assembly 242 may descend synchronously. The second sensing assembly 242 may include the triggering portion 2421 and the microswitch 2422. The triggering portion 2421 may be protrudingly disposed toward the container 26 relative to the beverage outlet 22. In a case where the beverage outlet 22 moves downward, the triggering portion 2421 may be configured to trigger the microswitch 2422 when touching the opening edge of the container 26. In some embodiments, the operation of determining whether the beverage outlet 22 has reached the target position during moving downward at block S3 may further include operations executed by the following blocks.

At block S321, whether the triggering portion 2421 triggers the microswitch 2422 may be determined.

After receiving the user instruction, during the downward movement of the beverage outlet 22, since the triggering portion 2421 is protrudingly disposed toward the container 26 relative to the beverage outlet 22, the triggering portion 2421 may trigger the microswitch 2422 after contacting the opening edge of the container 26.

In response to the triggering portion 2421 triggering the microswitch 2422, the operation of stopping the beverage outlet 22 from moving downward at block S4 may be executed.

In a case where the triggering portion 2421 triggers the microswitch 2422, it may indicate that the triggering portion 2421 abuts against the opening edge of the container 26. At this time, the beverage outlet 22 may be stopped from moving downward, and the first type of beverage ingredient and/or the second type of beverage ingredient may be dispensed into the beverage-receiving container 26 based on the user instruction. The first sensing assembly 241 may detect that the detection information in the container 26 meets the preset condition, and the dispensing of the first type of beverage ingredient and/or the second type of beverage ingredient may be stopped. The detection information may include the first information and the second information. The first information may be the vertical distance between the opening edge of the container 26 and the top of the first type of beverage ingredient. In a case where it is detected that the vertical distance between the opening edge of the container 26 and the top of the first type of beverage ingredient meets the preset condition, the dispensing of the first type of beverage ingredient may be stopped. The second information may be the vertical distance between the opening edge of the container 26 and the liquid level of the second type of beverage ingredient. In a case where it is detected that the vertical distance between the opening edge of the container 26 and the liquid level of the second type of beverage ingredient meets the preset condition, the dispensing of the second type of beverage ingredient may be stopped. In the embodiments, after the triggering portion 2421 triggers the microswitch 2422 to dispense the first type of beverage ingredient and/or the second type of beverage ingredient, the method of stopping the dispensing of the first type of beverage ingredient and/or the second type of beverage ingredient may include the following methods.

Method 1: in response to the user instruction being the first instruction, the first type of beverage ingredient may be dispensed based on the user instruction, and in response to detecting that the first information in the container 26 meets the first preset condition, the dispensing of the first type of beverage ingredient may be stopped.

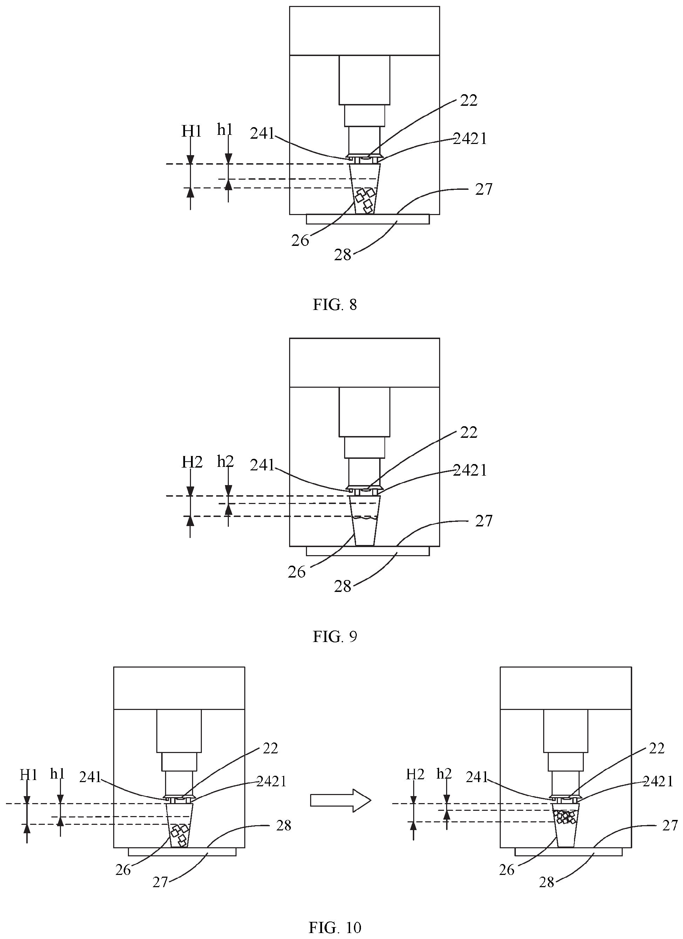

As shown in FIG. 8, in a case where the first type of beverage ingredient is dispensed based on the user instruction, the first sensing assembly 241 relatively fixed to the beverage outlet 22 may detect and confirm the vertical distance H1 between the opening edge of the container 26 and the top of the first type of beverage ingredient in real time. In a case where it is determined that H1 > h1, the dispensing of the first type of beverage ingredient may be continued. In a case where it is determined that H1 ≤ h1, it may indicate that the first type of beverage ingredient may splash if the first type of beverage ingredient is continuously added, and at this time, the dispensing of the first type of beverage ingredient may be stopped. The first information meeting the first preset condition may be H1 ≤ h1 being satisfied. h1 may be the minimum vertical distance between the opening edge of the container 26 and the top of the first type of beverage ingredient in a case where the first type of beverage ingredient may not splash out of the container 26. h1 may be obtained through data statistics or experience. In the embodiments, h1 may be set as the first preset value. The first preset condition may be that the vertical distance between the opening edge of the container 26 and the top of the first type of beverage ingredient is less than or equal to the first preset value, and the dispensing of the first type of beverage ingredient may be stopped.

Method 2: in response to the user instruction being the second instruction, the second type of beverage ingredient may be dispensed based on the user instruction, and in response to detecting that the second information in the container 26 meets the second preset condition, the dispensing of the second type of beverage ingredient may be stopped.

As shown in FIG. 9, in a case where the second type of beverage ingredient is dispensed based on the user instruction, the first sensing assembly 241 relatively fixed to the beverage outlet 22 may detect and confirm the vertical distance H2 between the opening edge of the container 26 and the liquid level of the second type of beverage ingredient in real time. In a case where it is determined that H2 > h2, the dispensing of the second type of beverage ingredient may be continued. In a case where it is determined that H2 ≤ h2, it may indicate that the second type of beverage ingredient may splash if the second type of beverage ingredient is continuously added, and at this time, the dispensing of the second type of beverage ingredient may be stopped. The second information meeting the second preset condition may be H2 ≤ h2 being satisfied. h2 may be the minimum vertical distance between the opening edge and the liquid level of the second type of beverage ingredient in a case where the second type of beverage ingredient may not splash out of the container 26. h2 may be obtained through data statistics or experience. In the embodiments, h2 may be set as the second preset value. The second preset condition may be that the vertical distance between the opening edge of the container 26 and the liquid level of the second type of beverage ingredient is less than or equal to the second preset value, and the dispensing of the second type of beverage ingredient may be stopped.

Method 3: in response to the user instruction being the third instruction, the first type of beverage ingredient may be dispensed based on the user instruction, and in response to detecting that the first information in the container 26 meets the first preset condition, the dispensing of the first type of beverage ingredient may be stopped; the second type of beverage ingredient may be dispensed based on the user instruction, and in response to detecting that the second information in the container 26 meets the second preset condition, the dispensing of the second type of beverage ingredient may be stopped.

As shown in FIG. 10, in response to the user instruction being the third instruction, the first type of beverage ingredient may be dispensed first. The first sensing assembly 241 relatively fixed to the beverage outlet 22 may detect the distance H1 between the opening edge of the container 26 and the top of the first type of beverage ingredient in real time. In a case where it is determined that H1 > h1, the dispensing of the first type of beverage ingredient may be continued. In a case where it is determined that H1 ≤ h1, it may indicate that the first type of beverage ingredient may splash if the first type of beverage ingredient is continuously added, and at this time, the dispensing of the first type of beverage ingredient may be stopped. The first information meeting the first preset condition may be H1 ≤ h1 being satisfied. h1 may be the minimum vertical distance between the opening edge of the container 26 and the top of the first type of beverage ingredient in a case where the first type of beverage ingredient may not splash out of the container 26. h1 may be obtained through data statistics or experience.

After the dispensing of the first type of beverage ingredient is completed, the second type of beverage ingredient may be dispensed. The first sensing assembly 241 relatively fixed to the beverage outlet 22 may detect and confirm the distance H2 between the opening edge of the container 26 and the liquid level of the second type of beverage ingredient in real time. In a case where it is determined that H2 > h2, the dispensing of the second type of beverage ingredient may be continued. In a case where it is determined that H2 ≤ h2, it may indicate that the second type of beverage ingredient may splash if the second type of beverage ingredient is continuously added, and at this time, the dispensing of the second type of beverage ingredient may be stopped. h2 may be the minimum vertical distance between the opening edge and the liquid level of the second type of beverage ingredient in a case where the second type of beverage ingredient may not splash out of the container 26. h2 may be obtained through data statistics or experience.

It should be noted that dispensing the first type of beverage ingredient first and then the second type of beverage ingredient may prevent the second type of beverage ingredient from splashing. In other embodiments, the second type of beverage ingredient may be dispensed first and then the first type of beverage ingredient. In the embodiments, h1 may be set as the first preset value. The first preset condition may be that the vertical distance between the opening edge of the container 26 and the top of the first type of beverage ingredient is less than or equal to the first preset value, and the dispensing of the first type of beverage ingredient may be stopped. h2 may be set as the second preset value. The second preset condition may be that the vertical distance between the opening edge of the container 26 and the liquid level of the second type of beverage ingredient is less than or equal to the second preset value, and the dispensing of the second type of beverage ingredient may be stopped. It should be noted that in other embodiments, the first preset condition may not be limited to the vertical distance between the opening edge of the container 26 and the top of the first type of beverage ingredient being less than or equal to the first preset value, and the second preset condition may not be limited to the vertical distance between the opening edge of the container 26 and the liquid level of the second type of beverage ingredient being less than or equal to the second preset value, but the vertical distance between the opening edge of the container 26 and the top of the first type of beverage ingredient or the vertical distance between the opening edge of the container 26 and the liquid level of the second type of beverage ingredient may also be less than other distances, which is not limited herein.

At block S322, in response to the triggering portion 2421 not triggering the microswitch 2422, the state of the beverage outlet 22 moving downward may be maintained, and the operation of determining whether the triggering portion 2421 triggers the microswitch 2422 at block S321 may be returned to and executed.

In response to the triggering portion 2421 not triggering the microswitch 2422, it may indicate that the distance between the beverage outlet 22 and the opening edge of the container 26 is still relatively far. At this time, the state of the beverage outlet 22 moving downward may be maintained, and the operation at block S321 may be returned to and executed.

In other embodiments, between the operation of determining whether the triggering portion 2421 triggers the microswitch 2422 and the operation of maintaining the state of the beverage outlet 22 moving downward and returning to execute the operation of determining whether the triggering portion 2421 triggers the microswitch 2422, the method may include: determining whether the beverage outlet 22 has reached the second end; in response to the beverage outlet 22 having reached the second end, executing the operation of stopping the beverage outlet 22 from moving downward; in response to the beverage outlet 22 not having reached the second end, executing the operation of maintaining the state of the beverage outlet 22 moving downward and returning to execute the operation of determining whether the triggering portion 2421 triggers the microswitch 2422.

After the operation at block S322, operations executed by the following blocks may be further included.

At block S3221, whether the beverage outlet 22 has reached the second end may be determined.

The beverage outlet 22 may continuously move downward, while the triggering portion 2421 may never trigger the microswitch 2422. It may be necessary to determine whether the beverage outlet 22 has reached the second end. The second end may be the lowest position that the beverage outlet 22 may move down to. In a case where a height of the opening edge of the container 26 is relatively low, even if the beverage outlet 22 continuously descends, the triggering portion 2421 may not contact the opening edge of the container 26. It may be necessary to determine whether the beverage outlet 22 has reached the lowest limit position, that is, the second end.

In response to the beverage outlet 22 having reached the second end, the operation of stopping the beverage outlet 22 from moving downward may be executed.

In a case where it is determined that the beverage outlet 22 has reached the second end and the triggering portion 2421 has never contacted the opening edge of the container 26, the operation at block S4 may be executed at this time, i.e., the beverage outlet 22 from moving downward may be stopped, and the first type of beverage ingredient and/or the second type of beverage ingredient may be dispensed into the beverage-receiving container 26 based on the user instruction. The first sensing assembly 241 may detect that the detection information in the container 26 meets the preset condition, and the dispensing of the first type of beverage ingredient and/or the second type of beverage ingredient may be stopped. The detection information may include the first information and the second information. The first information may be the vertical distance between the opening edge of the container 26 and the top of the first type of beverage ingredient. In a case where it is detected that the vertical distance between the opening edge of the container 26 and the top of the first type of beverage ingredient meets the preset condition, the dispensing of the first type of beverage ingredient may be stopped. The second information may be the vertical distance between the opening edge of the container 26 and the liquid level of the second type of beverage ingredient. In a case where it is detected that the vertical distance between the opening edge of the container 26 and the liquid level of the second type of beverage ingredient meets the preset condition, the dispensing of the second type of beverage ingredient may be stopped. In the embodiments, after the beverage outlet 22 reaches the second end and the triggering portion 2421 has never contacted the opening edge of the container 26, after dispensing the first type of beverage ingredient and/or the second type of beverage ingredient, the method of stopping the dispensing of the first type of beverage ingredient and/or the second type of beverage ingredient may include the following methods.

Method 1: in response to the user instruction being the first instruction, the first type of beverage ingredient may be dispensed based on the user instruction, and in response to detecting that the first information in the container 26 meets the first preset condition, the dispensing of the first type of beverage ingredient may be stopped.

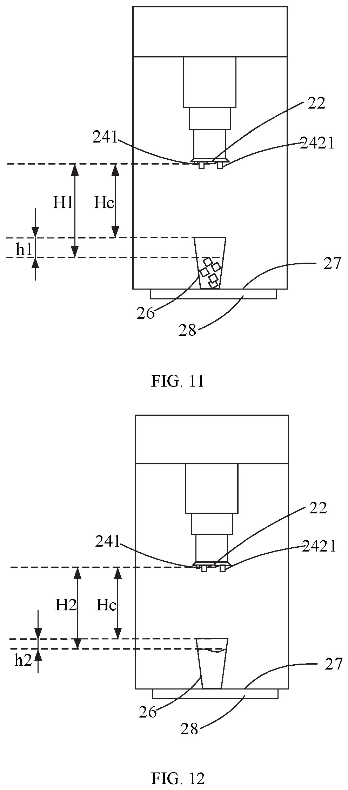

As shown in FIG. 11, the first sensing assembly 241 may detect the distance Hc, where the distance Hc may be the vertical distance between the beverage outlet 22 and the opening edge of the container 26. The distance between the beverage outlet 22 and the top of the first type of beverage ingredient when stopping the dispensing of the first type of beverage ingredient may be Hc + h1. h1 may be the minimum vertical distance between the opening edge and the top of the first type of beverage ingredient in a case where the first type of beverage ingredient may not splash out of the container 26. h1 may be obtained through data statistics or experience. In a case where the first type of beverage ingredient is dispensed based on the user instruction, the first sensing assembly 241 may detect and confirm the vertical distance H1 between the beverage outlet 22 and the top of the first type of beverage ingredient in real time. In a case where it is determined that H1 - Hc > h1, the dispensing of the first type of beverage ingredient may be continued. In a case where it is determined that H1 - Hc ≤ h1, it may indicate that the first type of beverage ingredient may splash if the first type of beverage ingredient is continuously added, and at this time, the dispensing of the first type of beverage ingredient may be stopped. The first information meeting the first preset condition may be H1 - Hc ≤ h1 being satisfied. In the embodiments, h1 may be set as the first preset value. The first preset condition may be that the vertical distance between the opening edge of the container 26 and the top of the first type of beverage ingredient is less than or equal to the first preset value, and the dispensing of the first type of beverage ingredient may be stopped.

Method 2: in response to the user instruction being the second instruction, the second type of beverage ingredient may be dispensed based on the user instruction, and in response to detecting that the second information in the container 26 meets the second preset condition, the dispensing of the second type of beverage ingredient may be stopped.

As shown in FIG. 12, the first sensing assembly 241 may detect the distance Hc, where the distance Hc may be the vertical distance between the beverage outlet 22 and the opening edge of the container 26. The distance between the beverage outlet 22 and the liquid level of the second type of beverage ingredient when stopping the dispensing of the second type of beverage ingredient may be Hc + h2. h2 may be the minimum vertical distance between the opening edge and the liquid level of the second type of beverage ingredient in a case where the second type of beverage ingredient may not splash out of the container 26. h2 may be obtained through data statistics or experience. In a case where the second type of beverage ingredient is dispensed based on the user instruction, the first sensing assembly 241 may detect and confirm a vertical distance H2 between the beverage outlet 22 and the liquid level of the second type of beverage ingredient in real time. In a case where it is determined that H2 - Hc > h2, the dispensing of the second type of beverage ingredient may be continued. In a case where it is determined that H2 - Hc ≤ h2, it may indicate that the second type of beverage ingredient may splash if the second type of beverage ingredient is continuously added, and at this time, the dispensing of the second type of beverage ingredient may be stopped. The second information meeting the second preset condition may be H2 - Hc ≤ h2 being satisfied. In the embodiments, h2 may be set as the second preset value. The second preset condition may be that the vertical distance between the opening edge of the container 26 and the liquid level of the second type of beverage ingredient is less than or equal to the second preset value, and the dispensing of the second type of beverage ingredient may be stopped.

Method 3: in response to the user instruction being the third instruction, the first type of beverage ingredient may be dispensed based on the user instruction, and in response to detecting that the first information in the container 26 meets the first preset condition, the dispensing of the first type of beverage ingredient may be stopped; the second type of beverage ingredient may be dispensed based on the user instruction, and in response to detecting that the second information in the container 26 meets the second preset condition, the dispensing of the second type of beverage ingredient may be stopped.

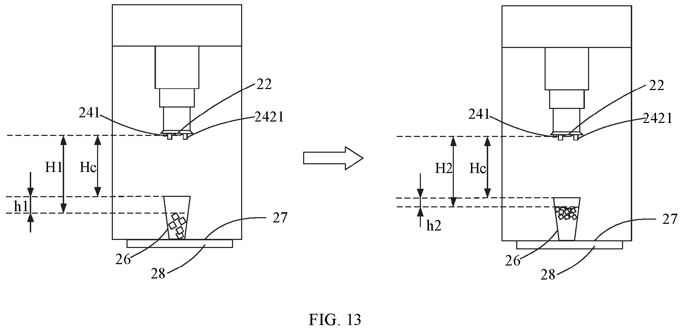

As shown in FIG. 13, in response to the user instruction being the third instruction, the first type of beverage ingredient may be dispensed first. The first sensing assembly 241 may detect the distance Hc, where the distance Hc may be the vertical distance between the beverage outlet 22 and the opening edge of the container 26. The distance between the beverage outlet 22 and the top of the first type of beverage ingredient when stopping the dispensing of the first type of beverage ingredient may be Hc + h1. h1 may be the minimum vertical distance between the opening edge and the top of the first type of beverage ingredient in a case where the first type of beverage ingredient may not splash out of the container 26. h1 may be obtained through data statistics or experience. In a case where the first type of beverage ingredient is dispensed based on the user instruction, the first sensing assembly 241 may detect and confirm the vertical distance H1 between the beverage outlet 22 and the top of the first type of beverage ingredient in real time. In a case where it is determined that H1 - Hc > h1, the dispensing of the first type of beverage ingredient may be continued. In a case where it is determined that H1 - Hc ≤ h1, it may indicate that the first type of beverage ingredient may splash if the first type of beverage ingredient is continuously added, and at this time, the dispensing of the first type of beverage ingredient may be stopped. The first information meeting the first preset condition may be H1 - Hc ≤ h1 being satisfied.

After the dispensing of the first type of beverage ingredient is completed, the second type of beverage ingredient may be dispensed. The distance between the beverage outlet 22 and the liquid level of the second type of beverage ingredient when stopping the dispensing of the second type of beverage ingredient may be Hc + h2. h2 may be the minimum vertical distance between the opening edge and the liquid level of the second type of beverage ingredient in a case where the second type of beverage ingredient may not splash out of the container 26. h2 may be obtained through data statistics or experience. In a case where the second type of beverage ingredient is dispensed based on the user instruction, the first sensing assembly 241 may detect and confirm the vertical distance H2 between the beverage outlet 22 and the liquid level of the second type of beverage ingredient in real time. In a case where it is determined that H2 - Hc > h2, the dispensing of the second type of beverage ingredient may be continued. In a case where it is determined that H2 - Hc ≤ h2, it may indicate that the second type of beverage ingredient may splash if the second type of beverage ingredient is continuously added, and at this time, the dispensing of the second type of beverage ingredient may be stopped. The second information meeting the second preset condition may be H2 - Hc ≤ h2 being satisfied.

It should be noted that dispensing the first type of beverage ingredient first and then the second type of beverage ingredient may prevent the second type of beverage ingredient from splashing. In other embodiments, the second type of beverage ingredient may be dispensed first and then the first type of beverage ingredient. In the embodiments, h1 may be set as the first preset value. The first preset condition may be that the vertical distance between the opening edge of the container 26 and the top of the first type of beverage ingredient is less than or equal to the first preset value, and the dispensing of the first type of beverage ingredient may be stopped. h2 may be set as the second preset value. The second preset condition may be that the vertical distance between the opening edge of the container 26 and the liquid level of the second type of beverage ingredient is less than or equal to the second preset value, and the dispensing of the second type of beverage ingredient may be stopped. It should be noted that in other embodiments, the first preset condition may not be limited to the vertical distance between the opening edge of the container 26 and the top of the first type of beverage ingredient being less than or equal to the first preset value, and the second preset condition may not be limited to the vertical distance between the opening edge of the container 26 and the liquid level of the second type of beverage ingredient being less than or equal to the second preset value, but the vertical distance between the opening edge of the container 26 and the top of the first type of beverage ingredient or the vertical distance between the opening edge of the container 26 and the liquid level of the second type of beverage ingredient may also be less than other distances, which is not limited herein.

In response to the beverage outlet 22 not having reached the second end, the operation of maintaining the state of the beverage outlet 22 moving downward may be executed and the operation of determining whether the triggering portion 2421 triggers the microswitch 2422 at block S321 may be returned to and executed.

In a case where it is determined that the beverage outlet 22 has not reached the second end, the operation at block S321 may be returned to and executed, i.e., whether the triggering portion 2421 triggers the microswitch 2422 may be determined.

Based on the embodiments of the present disclosure, the beverage dispensing device 20 may be disposed with a third sensing assembly. The third sensing assembly may be configured to move synchronously with the beverage outlet 22. Two sides of the carrying platform 27 of the beverage dispensing device 20 may include a first side wall 271 and a second side wall 272 disposed opposite to each other. The third sensing assembly may include a second transmitting portion 2431 and a second receiving portion 2432 disposed opposite to each other. The second transmitting portion 2431 may be movably disposed on the first side wall 271. The second receiving portion 2432 may be movably disposed on the second side wall 272. The operation of determining whether the beverage outlet 22 has reached the target position during moving downward may include: emitting a second detection wave by the second transmitting portion 2431; determining whether the second receiving portion 2432 receives the second detection wave; in response to the second receiving portion 2432 receiving the second detection wave, maintaining the state of the beverage outlet 22 moving downward, and returning to execute the operation of emitting the second detection wave by the second transmitting portion 2431; in response to the second receiving portion 2432 not receiving the second detection wave, executing the operation of stopping the beverage outlet 22 from moving downward.

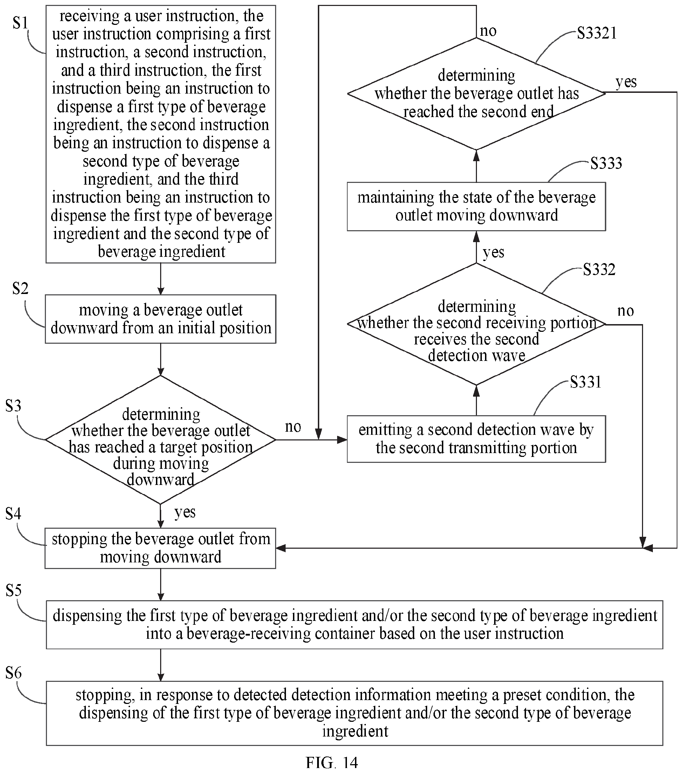

As shown in FIG. 14, in the embodiments, the beverage dispensing device 20 may include the third sensing assembly. The two sides of the carrying platform 27 may further include the first side wall 271 and the second side wall 272 arranged opposite to each other. The second transmitting portion 2431 of the third sensing assembly may be movably disposed on the first side wall 271. The second receiving portion 2432 of the third sensing assembly may be movably disposed on the second side wall 272. In a case where the beverage outlet 22 moves downward, the second transmitting portion 2431 and the second receiving portion 2432 of the third sensing assembly disposed oppositely may move downward synchronously. In some embodiments, the operation of determining whether the beverage outlet 22 has reached the target position during moving downward at block S3 may further include operations executed by the following blocks.

At block S331, the second detection wave may be emitted by the second transmitting portion 2431.

In a case where the beverage outlet 22 moves downward, the third sensing assembly may move down synchronously. The second transmitting portion 2431 disposed on the first side wall 271 may emit the second detection wave.

At block S332, whether the second receiving portion 2432 receives the second detection wave may be determined.

After the second transmitting portion 2431 disposed on the first side wall 271 emits the second detection wave, the second receiving portion 2432 disposed on the second side wall 272 may receive the second detection wave. The second transmitting portion 2431 and the second receiving portion 2432 may be disposed opposite to each other. Normally, if there is no container 26 blocking between the second transmitting portion 2431 and the second receiving portion 2432, the second receiving portion 2432 may receive the second detection wave emitted by the second transmitting portion 2431. In the embodiments, by determining whether the second receiving portion 2432 receives the second detection wave, it may be determined whether there is a container 26 above the carrying platform 27, or whether the beverage outlet 22 has reached the target position.

At block S333, in response to the second receiving portion 2432 receiving the second detection wave, the state of the beverage outlet 22 moving downward may be maintained, and the operation of emitting the second detection wave by the second transmitting portion 2431 may be returned to and executed.

In a case where the second receiving portion 2432 may receive the second detection wave, it may indicate that the beverage outlet 22 has not reached the target position. At this time, the state of the beverage outlet 22 moving downward may be maintained, and the operation at block S331 may be returned to and executed, i.e., the second detection wave may be emitted by the second transmitting portion 2431.

In response to the second receiving portion 2432 not receiving the second detection wave, the operation of stopping the beverage outlet 22 from moving downward at block S4 may be executed.

In a case where the second receiving portion 2432 may not receive the second detection wave, it may indicate that there is a container 26 blocking between the second transmitting portion 2431 and the second receiving portion 2432. That is, the opening edge of the container 26 may be detected, indicating that the beverage outlet 22 has reached the target position. At this time, the beverage outlet 22 may be stopped from moving downward. The first type of beverage ingredient and/or the second type of beverage ingredient may be dispensed into the container 26 based on the user instruction. The first sensing assembly 241 may detect that the detection information in the container 26 meets the preset condition, and the dispensing of the first type of beverage ingredient and/or the second type of beverage ingredient may be stopped. The detection information may include the first information and the second information. The first information may be the vertical distance between the opening edge of the container 26 and the top of the first type of beverage ingredient. In a case where it is detected that the vertical distance between the opening edge of the container 26 and the top of the first type of beverage ingredient meets the preset condition, the dispensing of the first type of beverage ingredient may be stopped. The second information may be the vertical distance between the opening edge of the container 26 and the liquid level of the second type of beverage ingredient. In a case where it is detected that the vertical distance between the opening edge of the container 26 and the liquid level of the second type of beverage ingredient meets the preset condition, the dispensing of the second type of beverage ingredient may be stopped. In the embodiments, by setting the preset condition, after detecting that the detection information in the container 26 meets the preset condition, the dispensing of the first type of beverage ingredient and/or the second type of beverage ingredient may be automatically stopped, which may prevent beverage overflow and improve operational convenience. The method of stopping the dispensing of the first type of beverage ingredient and/or the second type of beverage ingredient may include the following methods.

Method 1: in response to the user instruction being the first instruction, the first type of beverage ingredient may be dispensed based on the user instruction, and in response to detecting that the first information in the container 26 meets the first preset condition, the dispensing of the first type of beverage ingredient may be stopped.

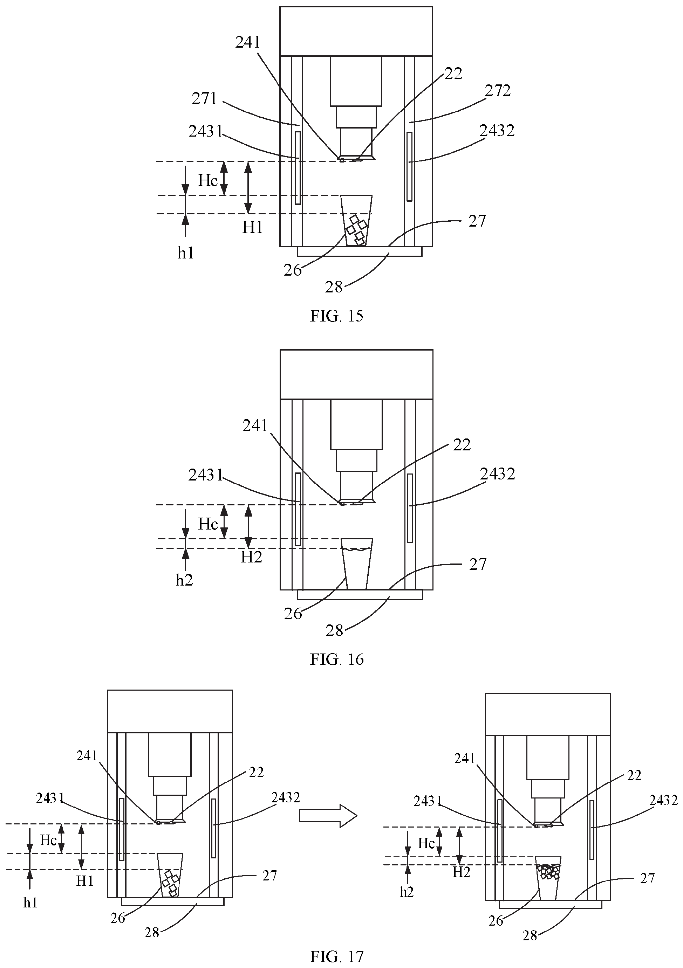

As shown in FIG. 15, since the third sensing assembly may move synchronously with the beverage outlet 22, a vertical distance between the second transmitting portion 2431 and the second receiving portion 2432 and the beverage outlet 22 may be a fixed distance Hc. The distance between the beverage outlet 22 and the top of the first type of beverage ingredient when stopping the dispensing of the first type of beverage ingredient may be Hc + h1. h1 may be the minimum vertical distance between the opening edge and the top of the first type of beverage ingredient in a case where the first type of beverage ingredient may not splash out of the container 26. h1 may be obtained through data statistics or experience. In a case where the first type of beverage ingredient is dispensed based on the user instruction, the first sensing assembly 241 may detect and confirm the vertical distance H1 between the beverage outlet 22 and the top of the first type of beverage ingredient in real time. In a case where it is determined that H1 - Hc > h1, the dispensing of the first type of beverage ingredient may be continued. In a case where it is determined that H1 - Hc ≤ h1, it may indicate that the first type of beverage ingredient may splash if the first type of beverage ingredient is continuously added, and at this time, the dispensing of the first type of beverage ingredient may be stopped. The first information meeting the first preset condition may be H1 - Hc ≤ h1 being satisfied. In the embodiments, h1 may be set as the first preset value. The first preset condition may be that the vertical distance between the opening edge of the container 26 and the top of the first type of beverage ingredient is less than or equal to the first preset value, and the dispensing of the first type of beverage ingredient may be stopped.

Method 2: in response to the user instruction being the second instruction, the second type of beverage ingredient may be dispensed based on the user instruction, and in response to detecting that the second information in the container 26 meets the second preset condition, the dispensing of the second type of beverage ingredient may be stopped.

As shown in FIG. 16, since the third sensing assembly may move synchronously with the beverage outlet 22, the vertical distance between the second transmitting portion 2431 and the second receiving portion 2432 and the beverage outlet 22 may be the fixed distance Hc. The distance between the beverage outlet 22 and the liquid level of the second type of beverage ingredient when stopping the dispensing of the second type of beverage ingredient may be Hc + h2. h2 may be the minimum vertical distance between the opening edge and the liquid level of the second type of beverage ingredient in a case where the second type of beverage ingredient may not splash out of the container 26. h2 may be obtained through data statistics or experience. In a case where the second type of beverage ingredient is dispensed based on the user instruction, the first sensing assembly 241 may detect and confirm a vertical distance H2 between the beverage outlet 22 and the liquid level of the second type of beverage ingredient in real time. In a case where it is determined that H2 - Hc > h2, the dispensing of the second type of beverage ingredient may be continued. In a case where it is determined that H2 - Hc ≤ h2, it may indicate that the second type of beverage ingredient may splash if the second type of beverage ingredient is continuously added, and at this time, the dispensing of the second type of beverage ingredient may be stopped. The second information meeting the second preset condition may be H2 - Hc ≤ h2 being satisfied. In the embodiments, h2 may be set as the second preset value. The second preset condition may be that the vertical distance between the opening edge of the container 26 and the liquid level of the second type of beverage ingredient is less than or equal to the second preset value, and the dispensing of the second type of beverage ingredient may be stopped.

Method 3: in response to the user instruction being the third instruction, the first type of beverage ingredient may be dispensed based on the user instruction, and in response to detecting that the first information in the container 26 meets the first preset condition, the dispensing of the first type of beverage ingredient may be stopped; the second type of beverage ingredient may be dispensed based on the user instruction, and in response to detecting that the second information in the container 26 meets the second preset condition, the dispensing of the second type of beverage ingredient may be stopped.

As shown in FIG. 17, in response to the user instruction being the third instruction, the first type of beverage ingredient may be dispensed first. The vertical distance between the second transmitting portion 2431 and the second receiving portion 2432 and the beverage outlet 22 may be the fixed distance Hc. The distance between the beverage outlet 22 and the top of the first type of beverage ingredient when stopping the dispensing of the first type of beverage ingredient may be Hc + h1. h1 may be the minimum vertical distance between the opening edge and the top of the first type of beverage ingredient in a case where the first type of beverage ingredient may not splash out of the container 26. h1 may be obtained through data statistics or experience. In a case where the first type of beverage ingredient is dispensed based on the user instruction, the first sensing assembly 241 may detect and confirm the vertical distance H1 between the beverage outlet 22 and the top of the first type of beverage ingredient in real time. In a case where it is determined that H1 - Hc > h1, the dispensing of the first type of beverage ingredient may be continued. In a case where it is determined that H1 - Hc ≤ h1, it may indicate that the first type of beverage ingredient may splash if the first type of beverage ingredient is continuously added, and at this time, the dispensing of the first type of beverage ingredient may be stopped. The first information meeting the first preset condition may be H1 - Hc ≤ h1 being satisfied.

After the dispensing of the first type of beverage ingredient is completed, the second type of beverage ingredient may be dispensed. The distance between the beverage outlet 22 and the liquid level of the second type of beverage ingredient when stopping the dispensing of the second type of beverage ingredient may be Hc + h2. h2 may be the minimum vertical distance between the opening edge and the liquid level of the second type of beverage ingredient in a case where the second type of beverage ingredient may not splash out of the container 26. h2 may be obtained through data statistics or experience. In a case where the second type of beverage ingredient is dispensed based on the user instruction, the first sensing assembly 241 may detect and confirm the vertical distance H2 between the beverage outlet 22 and the liquid level of the second type of beverage ingredient in real time. In a case where it is determined that H2 - Hc > h2, the dispensing of the second type of beverage ingredient may be continued. In a case where it is determined that H2 - Hc ≤ h2, it may indicate that the second type of beverage ingredient may splash if the second type of beverage ingredient is continuously added, and at this time, the dispensing of the second type of beverage ingredient may be stopped. The second information meeting the second preset condition may be H2 - Hc ≤ h2 being satisfied.

It should be noted that dispensing the first type of beverage ingredient first and then the second type of beverage ingredient may prevent the first type of beverage ingredient and/or the second type of beverage ingredient from splashing. In other embodiments, the second type of beverage ingredient may be dispensed first and then the first type of beverage ingredient. In other embodiments, the first preset condition may not be limited to the vertical distance between the opening edge of the container 26 and the top of the first type of beverage ingredient being less than or equal to the first preset value, and the second preset condition may not be limited to the vertical distance between the opening edge of the container 26 and the liquid level of the second type of beverage ingredient being less than or equal to the second preset value, but the vertical distance between the opening edge of the container 26 and the top of the first type of beverage ingredient or the vertical distance between the opening edge of the container 26 and the liquid level of the second type of beverage ingredient may also be less than other distances, which is not limited herein.

In other embodiments, as shown in FIG. 14, between the operation of determining whether the second receiving portion 2432 receives the second detection wave and the operation of maintaining the state of the beverage outlet 22 moving downward and returning to execute the operation of emitting the second detection wave by the second transmitting portion 2431, the method may include: determining whether the beverage outlet 22 has reached the second end; in response to the beverage outlet 22 having reached the second end, executing the operation of stopping the beverage outlet 22 from moving downward; in response to the beverage outlet 22 not having reached the second end, executing the operation of maintaining the state of the beverage outlet 22 moving downward and returning to execute the operation of emitting the second detection wave by the second transmitting portion 2431.

After determining whether the second receiving portion 2432 receives the second detection wave, operations executed by the following blocks may be further included.

At block S3321, whether the beverage outlet 22 has reached the second end may be determined.

The beverage outlet 22 may continuously move downward, and the second receiving portion 2432 may always receive the second detection wave. It may be necessary to determine whether the beverage outlet 22 has reached the second end. The second end may be the lowest position that the beverage outlet 22 may move down to. In a case where the height of the opening edge of the container 26 is relatively low, even if the beverage outlet 22 continuously descends, the second transmitting portion 2431 and the second receiving portion 2432 of the third sensing assembly may not sense the existence of the container 26. It may be necessary to determine whether the beverage outlet 22 has reached the lowest limit position, that is, the second end.

In response to the beverage outlet 22 having reached the second end, the operation of stopping the beverage outlet 22 from moving downward may be executed.

In a case where it is determined that the beverage outlet 22 has reached the second end, the beverage outlet 22 may be stopped from moving downward, and the first type of beverage ingredient and/or the second type of beverage ingredient may be dispensed into the beverage-receiving container 26 based on the user instruction. The first sensing assembly 241 may detect that the detection information in the container 26 meets the preset condition, and the dispensing of the first type of beverage ingredient and/or the second type of beverage ingredient may be stopped. The detection information may include the first information and the second information. The first information may be the vertical distance between the opening edge of the container 26 and the top of the first type of beverage ingredient. In a case where it is detected that the vertical distance between the opening edge of the container 26 and the top of the first type of beverage ingredient meets the preset condition, the dispensing of the first type of beverage ingredient may be stopped. The second information may be the vertical distance between the opening edge of the container 26 and the liquid level of the second type of beverage ingredient. In a case where it is detected that the vertical distance between the opening edge of the container 26 and the liquid level of the second type of beverage ingredient meets the preset condition, the dispensing of the second type of beverage ingredient may be stopped. In the embodiments, after the beverage outlet 22 reaches the second end while the triggering portion 2421 has never contacted the opening edge of the container 26, after dispensing the first type of beverage ingredient and/or the second type of beverage ingredient, the method of stopping the dispensing of the first type of beverage ingredient and/or the second type of beverage ingredient may include the following methods.

Method 1: in response to the user instruction being the first instruction, the first type of beverage ingredient may be dispensed based on the user instruction, and in response to detecting that the first information in the container 26 meets the first preset condition, the dispensing of the first type of beverage ingredient may be stopped.

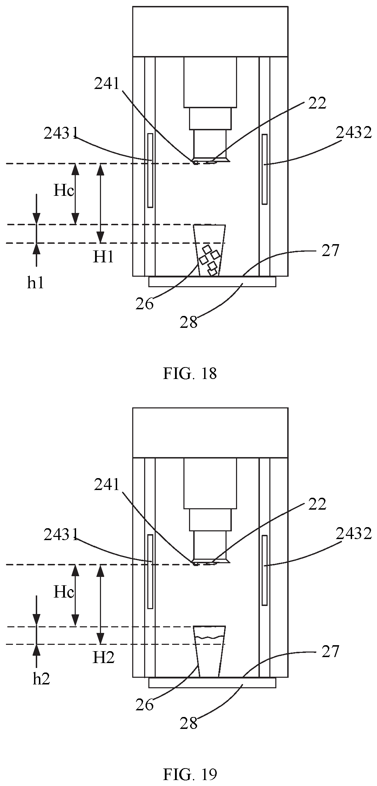

As shown in FIG. 18, the first sensing assembly 241 may detect the distance Hc, where the distance Hc may be the vertical distance between the beverage outlet 22 and the opening edge of the container 26. The distance between the beverage outlet 22 and the top of the first type of beverage ingredient when stopping the dispensing of the first type of beverage ingredient may be Hc + h1. h1 may be the minimum vertical distance between the opening edge and the top of the first type of beverage ingredient in a case where the first type of beverage ingredient may not splash out of the container 26. h1 may be obtained through data statistics or experience. In a case where the first type of beverage ingredient is dispensed based on the user instruction, the first sensing assembly 241 may detect and confirm the vertical distance H1 between the beverage outlet 22 and the top of the first type of beverage ingredient in real time. In a case where it is determined that H1 - Hc > h1, the dispensing of the first type of beverage ingredient may be continued. In a case where it is determined that H1 - Hc ≤ h1, it may indicate that the first type of beverage ingredient may splash if the first type of beverage ingredient is continuously added, and at this time, the dispensing of the first type of beverage ingredient may be stopped. The first information meeting the first preset condition may be H1 - Hc ≤ h1 being satisfied. In the embodiments, h1 may be set as the first preset value. The first preset condition may be that the vertical distance between the opening edge of the container 26 and the top of the first type of beverage ingredient is less than or equal to the first preset value, and the dispensing of the first type of beverage ingredient may be stopped.

Method 2: in response to the user instruction being the second instruction, the second type of beverage ingredient may be dispensed based on the user instruction, and in response to detecting that the second information in the container 26 meets the second preset condition, the dispensing of the second type of beverage ingredient may be stopped.

As shown in FIG. 19, the first sensing assembly 241 may detect the distance Hc, where the distance Hc may be the vertical distance between the beverage outlet 22 and the opening edge of the container 26. The distance between the beverage outlet 22 and the liquid level of the second type of beverage ingredient when stopping the dispensing of the second type of beverage ingredient may be Hc + h2. h2 may be the minimum vertical distance between the opening edge and the liquid level of the second type of beverage ingredient in a case where the second type of beverage ingredient may not splash out of the container 26. h2 may be obtained through data statistics or experience. In a case where the second type of beverage ingredient is dispensed based on the user instruction, the first sensing assembly 241 may detect and confirm the vertical distance H2 between the beverage outlet 22 and the liquid level of the second type of beverage ingredient in real time. In a case where it is determined that H2 - Hc > h2, the dispensing of the second type of beverage ingredient may be continued. In a case where it is determined that H2 - Hc ≤ h2, it may indicate that the second type of beverage ingredient may splash if the second type of beverage ingredient is continuously added, and at this time, the dispensing of the second type of beverage ingredient may be stopped. The second information meeting the second preset condition may be H2 - Hc ≤ h2 being satisfied. In the embodiments, h2 may be set as the second preset value. The second preset condition may be that the vertical distance between the opening edge of the container 26 and the liquid level of the second type of beverage ingredient is less than or equal to the second preset value, and the dispensing of the second type of beverage ingredient may be stopped.

Method 3: in response to the user instruction being the third instruction, the first type of beverage ingredient may be dispensed based on the user instruction, and in response to detecting that the first information in the container 26 meets the first preset condition, the dispensing of the first type of beverage ingredient may be stopped; the second type of beverage ingredient may be dispensed based on the user instruction, and in response to detecting that the second information in the container 26 meets the second preset condition, the dispensing of the second type of beverage ingredient may be stopped.

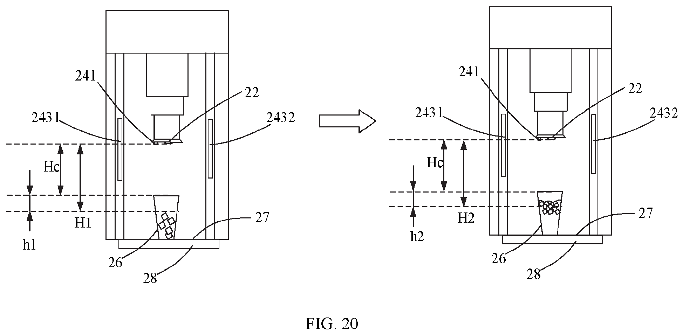

As shown in FIG. 20, in response to the user instruction being the third instruction, the first type of beverage ingredient may be dispensed first. The first sensing assembly 241 may detect the distance Hc, where the distance Hc may be the vertical distance between the beverage outlet 22 and the opening edge of the container 26. The distance between the beverage outlet 22 and the top of the first type of beverage ingredient when stopping the dispensing of the first type of beverage ingredient may be Hc + h1. h1 may be the minimum vertical distance between the opening edge and the top of the first type of beverage ingredient in a case where the first type of beverage ingredient may not splash out of the container 26. h1 may be obtained through data statistics or experience. In a case where the first type of beverage ingredient is dispensed based on the user instruction, the first sensing assembly 241 may detect and confirm the vertical distance H1 between the beverage outlet 22 and the top of the first type of beverage ingredient in real time. In a case where it is determined that H1 - Hc > h1, the dispensing of the first type of beverage ingredient may be continued. In a case where it is determined that H1 - Hc ≤ h1, it may indicate that the first type of beverage ingredient may splash if the first type of beverage ingredient is continuously added, and at this time, the dispensing of the first type of beverage ingredient may be stopped. The first information meeting the first preset condition may be H1 - Hc ≤ h1 being satisfied.

After the dispensing of the first type of beverage ingredient is completed, the second type of beverage ingredient may be dispensed. The distance between the beverage outlet 22 and the liquid level of the second type of beverage ingredient when stopping the dispensing of the second type of beverage ingredient may be Hc + h2. h2 may be the minimum vertical distance between the opening edge and the liquid level of the second type of beverage ingredient in a case where the second type of beverage ingredient may not splash out of the container 26. h2 may be obtained through data statistics or experience. In a case where the second type of beverage ingredient is dispensed based on the user instruction, the first sensing assembly 241 may detect and confirm the vertical distance H2 between the beverage outlet 22 and the liquid level of the second type of beverage ingredient in real time. In a case where it is determined that H2 - Hc > h2, the dispensing of the second type of beverage ingredient may be continued. In a case where it is determined that H2 - Hc ≤ h2, it may indicate that the second type of beverage ingredient may splash if the second type of beverage ingredient is continuously added, and at this time, the dispensing of the second type of beverage ingredient may be stopped. The second information meeting the second preset condition may be H2 - Hc ≤ h2 being satisfied.

In response to the beverage outlet 22 not having reached the second end, the operation of maintaining the state of the beverage outlet 22 moving downward may be executed and the operation of emitting the second detection wave by the second transmitting portion 2431 at block S331 may be returned to and executed.

It should be noted that dispensing the first type of beverage ingredient first and then the second type of beverage ingredient may prevent the second type of beverage ingredient from splashing. In other embodiments, the second type of beverage ingredient may be dispensed first and then the first type of beverage ingredient. In the embodiments, h1 may be set as the first preset value. The first preset condition may be that the vertical distance between the opening edge of the container 26 and the top of the first type of beverage ingredient is less than or equal to the first preset value, and the dispensing of the first type of beverage ingredient may be stopped. h2 may be set as the second preset value. The second preset condition may be that the vertical distance between the opening edge of the container 26 and the liquid level of the second type of beverage ingredient is less than or equal to the second preset value, and the dispensing of the second type of beverage ingredient may be stopped. It should be noted that in other embodiments, the first preset condition may not be limited to the vertical distance between the opening edge of the container 26 and the top of the first type of beverage ingredient being less than or equal to the first preset value, and the second preset condition may not be limited to the vertical distance between the opening edge of the container 26 and the liquid level of the second type of beverage ingredient being less than or equal to the second preset value, but the vertical distance between the opening edge of the container 26 and the top of the first type of beverage ingredient or the vertical distance between the opening edge of the container 26 and the liquid level of the second type of beverage ingredient may also be less than other distances, which is not limited herein.

Based on the embodiments of the present disclosure, the beverage dispensing device 20 may be disposed with a fourth sensing assembly 244. The fourth sensing assembly 244 may be located above the carrying platform 27. The fourth sensing assembly 244 may be configured to determine whether the beverage outlet 22 has moved down to the target position and obtain detection information through image information. In the embodiments, the beverage dispensing device 20 may include the fourth sensing assembly 244. The fourth sensing assembly 244 may determine whether the beverage outlet 22 has moved down to the target position through the obtained image information, and feedback the detection information based on the image information in real time. In a case where the detection information meets the preset condition, the dispensing of the first type of beverage ingredient and/or the second type of beverage ingredient may be stopped.

Based on the embodiments of the present disclosure, the beverage dispensing device 20 may further include a water receiving box 28 and a prompt assembly 282. The water receiving box 28 may be disposed with a water level sensor 281. The water receiving box 28 may be located under the carrying platform 27. The prompt assembly 282 may be configured to output prompt information. The control method may further include: in response to the beverage outlet 22 being stopped from moving downward, determining whether a water level in the water receiving box 28 reaches a preset water level based on a detection signal obtained by the water level sensor 281; in response to the water level in the water receiving box 28 reaching the preset water level, outputting the prompt information by the prompt assembly 282; in response to the water level in the water receiving box 28 not reaching the preset water level, dispensing the first type of beverage ingredient and/or the second type of beverage ingredient into the beverage-receiving container 26 based on the user instruction, and at the same time, continuously determining whether the water level in the water receiving box 28 reaches the preset water level based on the detection signal obtained by the water level sensor 281; in response to the water level in the water receiving box 28 reaching the preset water level, stopping the dispensing of the first type of beverage ingredient and/or the second type of beverage ingredient and outputting the prompt information.

As shown in FIG. 5 or FIG. 6, the beverage dispensing device 20 may further include the water receiving box 28 located under the carrying platform 27. The water level sensor 281 may be disposed in the water receiving box 28. The control method may further include operations executed by the following blocks.

At block S51, in response to the beverage outlet 22 being stopped from moving downward, whether the water level in the water receiving box 28 reaches the preset water level may be determined based on the detection signal obtained by the water level sensor 281.

Generally, after the beverage outlet 22 moves down to a suitable position, the beverage dispensing device 20 may dispense the first type of beverage ingredient and/or the second type of beverage ingredient into the container 26 based on the user instruction. In order to avoid situations such as the user temporarily taking away the container 26, moving the container 26, or replacing the container 26, which may easily cause the first type of beverage ingredient and/or the second type of beverage ingredient dispensed from the beverage outlet 22 to fill the water receiving box 28 and thus cause the overflow of the second type of beverage ingredient, the water level sensor 281 may be disposed to detect the water level in the water receiving box 28, so as to control the dispensing or closing of the beverage outlet 22.

In response to the water level in the water receiving box 28 reaching the preset water level, the operation at block S52 may be executed, i.e., the prompt information may be outputted by the prompt assembly 282.

In a case where the water level sensor 281 determines that the water level in the water receiving box 28 reaches the preset water level based on the obtained detection signal, it may indicate that if the first type of beverage ingredient and/or the second type of beverage ingredient enters the water receiving box 28, the second type of beverage ingredient in the water receiving box 28 may overflow. Therefore, the beverage dispensing device 20 may not dispense the first type of beverage ingredient and/or the second type of beverage ingredient, and the prompt assembly 282 may output the prompt information to remind the user to clean the water receiving box 28 in a timely manner. The prompt assembly 282 may include a display screen, an LED light, a sound box, a vibrator, etc. The prompt information may include text or an image displayed by the display screen; a light emitted or flashed by the LED light; a sound played by the sound box; a vibration generated by the vibrator, etc.

In response to the water level in the water receiving box 28 not reaching the preset water level, the first type of beverage ingredient and/or the second type of beverage ingredient may be dispensed into the beverage-receiving container 26 based on the user instruction, and at the same time, whether the water level in the water receiving box 28 reaches the preset water level may be continuously determined based on the detection signal obtained by the water level sensor 281. In response to the water level in the water receiving box 28 reaching the preset water level, the dispensing of the first type of beverage ingredient and/or the second type of beverage ingredient may be stopped and the prompt information may be output.

Based on the embodiments of the present disclosure, in response to stopping the dispensing of the first type of beverage ingredient and/or the second type of beverage ingredient, the beverage outlet may be controlled to move toward an initial direction to facilitate removing the container and cleaning the water receiving box.

The embodiments may be understood as follows. After the beverage outlet 22 moves down to a suitable position, in a case where the water level sensor 281 determines that the water level in the water receiving box 28 does not reach the preset water level based on the obtained detection signal, the first type of beverage ingredient and/or the second type of beverage ingredient may be dispensed into the beverage-receiving container 26 based on the user instruction. During the dispensing of the first type of beverage ingredient and/or the second type of beverage ingredient, the detection signal of the water level sensor 281 may continue to be obtained to determine whether the water level in the water receiving box 28 reaches the preset water level. In a case where the water level in the water receiving box 28 does not reach the preset water level, the dispensing of the first type of beverage ingredient and/or the second type of beverage ingredient may be continued. In a case where the water level in the water receiving box 28 reaches the preset water level, the dispensing of the first type of beverage ingredient and/or the second type of beverage ingredient may be stopped immediately and the prompt information may be output. In the embodiments, by continuously detecting whether the water level in the water receiving box 28 reaches the preset water level during the dispensing of the first type of beverage ingredient and/or the second type of beverage ingredient, it may avoid situations such as the user temporarily taking away the container 26, moving the container 26, or replacing the container 26 during the dispensing of the beverage ingredients, which may easily cause the first type of beverage ingredient and/or the second type of beverage ingredient dispensed from the beverage outlet 22 to fill the water receiving box 28 and thus cause the overflow of the second type of beverage ingredient. Therefore, the water level sensor 281 may continuously detect the water level in the water receiving box 28 to control the dispensing or closing of the beverage outlet 22. After stopping the dispensing of the first type of beverage ingredient and/or the second type of beverage ingredient, the beverage outlet may be controlled to move toward the initial direction to facilitate removing the container 26 and cleaning the water receiving box 28.

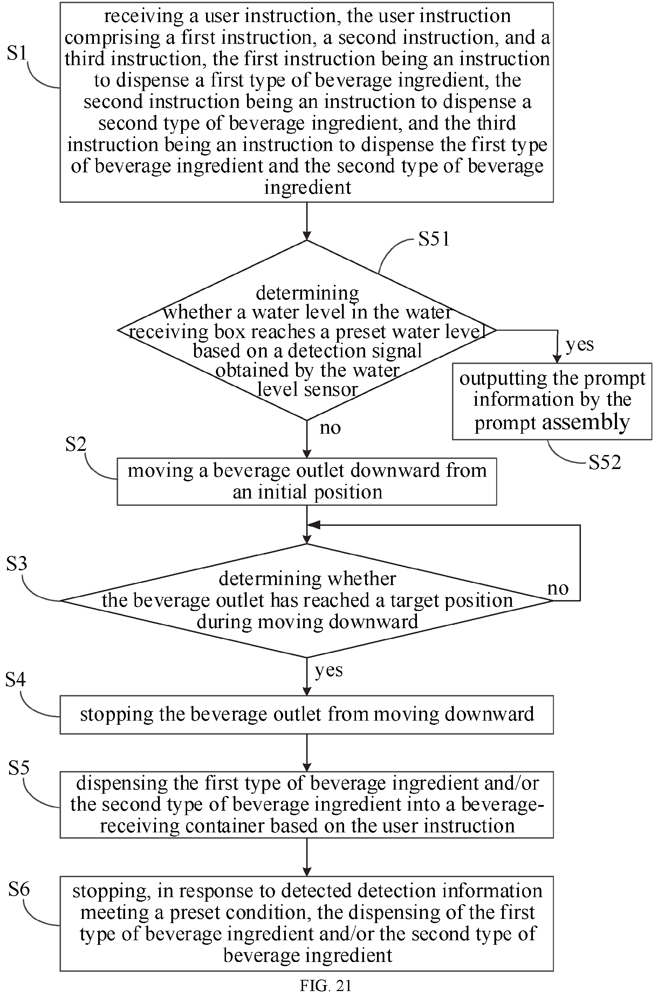

Based on the embodiments of the present disclosure, as shown in FIG. 21, the beverage dispensing device 20 may further include the water receiving box 28 located under the carrying platform 27 and the prompt assembly 282. The water level sensor 281 may be disposed in the water receiving box 28. The control method may further include operations executed by the following blocks.

At block S51, in response to the user instruction being received, whether the water level in the water receiving box 28 reaches the preset water level may be determined based on the detection signal obtained by the water level sensor 281.

After the beverage dispensing device 20 receives the user instruction, in order to avoid situations such as the user temporarily taking away the container 26, moving the container 26, or replacing the container 26, which may easily cause the first type of beverage ingredient and/or the second type of beverage ingredient dispensed from the beverage outlet 22 to fill the water receiving box 28 and thus cause the overflow of the second type of beverage ingredient, the water level sensor 281 may be disposed first to detect the water level in the water receiving box 28, so as to determine whether it is necessary to remind the user to clean the water receiving box 28.

In response to the water level in the water receiving box 28 reaching the preset water level, the operation at block S52 may be executed, i.e., the prompt information may be outputted by the prompt assembly 282.

In a case where the water level sensor 281 determines that the water level in the water receiving box 28 reaches the preset water level based on the obtained detection signal, it may indicate that if the first type of beverage ingredient and/or the second type of beverage ingredient enters the water receiving box 28, the second type of beverage ingredient in the water receiving box 28 may overflow. Therefore, the prompt assembly 282 may output the prompt information to remind the user to clean the water receiving box 28 in a timely manner.

In response to the water level in the water receiving box 28 not reaching the preset water level, the operation of moving the beverage outlet 22 downward from the initial position may be executed.

Based on the embodiments of the present disclosure, the control method may further include: in response to the user instruction being received, determining whether a presence of the container 26 is detected on the carrying platform 27; in response to the presence of the container 26 being detected on the carrying platform 27, moving the beverage outlet 22 downward from the initial position; in response to the presence of the container 26 not being detected on the carrying platform 27, stopping the beverage outlet 22 from moving.

After the beverage dispensing device 20 receives the user instruction, in order to avoid situations such as the user mistakenly touching the device or temporarily taking away the container 26, resulting in no container 26 actually needing to receive the first type of beverage ingredient and/or the second type of beverage ingredient, it may be necessary to determine whether the presence of the container 26 is detected on the carrying platform 27 before the beverage outlet 22 moves downward from the initial position.

In response to the presence of the container 26 being detected on the carrying platform 27, the operation of moving the beverage outlet 22 downward from the initial position may be executed.

In response to the presence of the container 26 not being detected on the carrying platform 27, it may indicate that there is no container 26 on the carrying platform 27. At this time, the beverage outlet 22 may not descend, and the dispensing of the first type of beverage ingredient and/or the second type of beverage ingredient may be stopped.

In the embodiments, by detecting whether there is a container 26 on the carrying platform 27 after receiving the user instruction, it may avoid beverage ingredient splashing or overflow caused by mistaken touches. It should be noted that in the embodiments, the presence of the container 26 may be detected via a microswitch, an infrared pair tube, an infrared transceiver (installed on the same side to receive reflected light), an ultrasonic sensor, etc.

In some embodiments, the detection information may include a vertical distance between a top of a receiving object in the container and the opening edge of the container.

In a case where the receiving object in the container is only the first type of beverage ingredient, the vertical distance between the top of the receiving object in the container and the opening edge of the container may be the first information.

In a case where the receiving object in the container is only the second type of beverage ingredient, the vertical distance between the top of the receiving object in the container and the opening edge of the container may be the second information.

The receiving object in the container may include a mixture of the first type of beverage ingredient and the second type of beverage ingredient. In a case where the first type of beverage ingredient sinks to a bottom of the second type of beverage ingredient or is suspended in the second type of beverage ingredient, the vertical distance between the top of the receiving object in the container and the opening edge of the container may be the second information. In a case where the first type of beverage ingredient floats on the second type of beverage ingredient and a distance between the top of the first type of beverage ingredient protruding from the liquid level of the second type of beverage ingredient and the liquid level of the second type of beverage ingredient is relatively small (e.g., less than 2 millimeters, less than 3 millimeters, less than 5 millimeters, etc.), the vertical distance between the top of the receiving object in the container and the opening edge of the container may be the second information or the first information. In a case where the first type of beverage ingredient floats on the second type of beverage ingredient and the distance between the top of the first type of beverage ingredient protruding from the liquid level of the second type of beverage ingredient and the liquid level of the second type of beverage ingredient is relatively large (e.g., greater than or equal to 5 millimeters, greater than or equal to 8 millimeters, greater than or equal to 1 centimeter, etc.), the vertical distance between the top of the receiving object in the container and the opening edge of the container may be the first information.

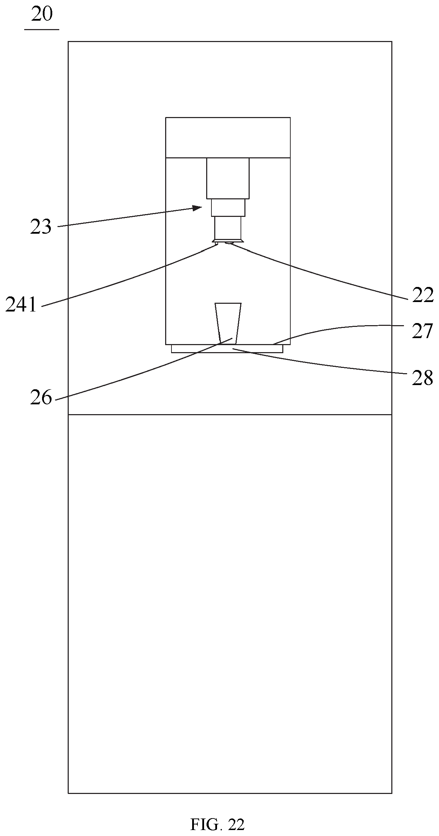

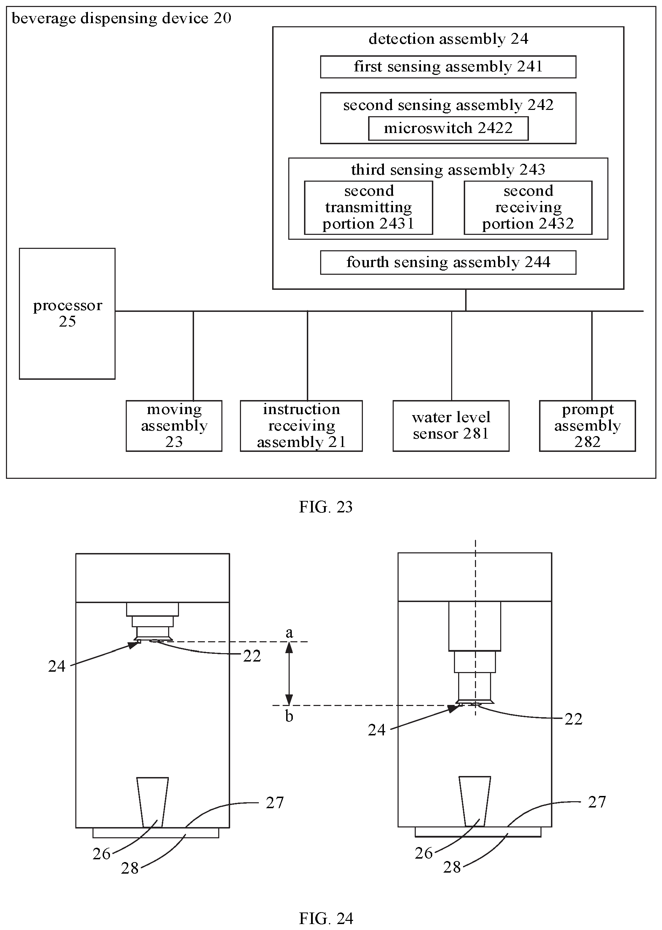

In order to solve the above technical problem, the present disclosure may further provide a beverage dispensing device 20. As shown in FIG. 22 and FIG. 23, the beverage dispensing device 20 may include an instruction receiving assembly 21, the beverage outlet 22, a moving assembly 2323, a detection assembly 24, and a processor 25. The instruction receiving assembly 21 may be configured to receive the user instruction. The user instruction may include the first instruction, the second instruction, and the third instruction. The first instruction may be an instruction to dispense the first type of beverage ingredient. The second instruction may be an instruction to dispense the second type of beverage ingredient. The third instruction may be an instruction to dispense the first type of beverage ingredient and the second type of beverage ingredient. The beverage outlet 22 may be configured to dispense a beverage into the container 26. The beverage may include the first type of beverage ingredient and/or the second type of beverage ingredient. The first type of beverage ingredient may include an ingredient with a fixed shape, an elastic ingredient, and an ingredient with poor fluidity, such as an ice cube, a crushed ice, a red bean, a mung bean, a peanut, a pearl, coconut jelly, taro ball, and milk jelly in bubble tea, a jelly, a tortoise jelly, a fruit puree, a taro puree, an ice cream, a puffed food, a baked good, etc. The second type of beverage ingredient may include an ingredient with high fluidity, such as water, fruit juice, milk, coffee, cola, soybean milk, etc. The moving assembly 2323 may be connected to the beverage outlet 22. The moving assembly 2323 may be configured to move the beverage outlet 22. The detection assembly 24 may be configured to detect the opening edge of the container 26 and the detection information in the container 26. The processor 25 may be connected to the instruction receiving assembly 21, the moving assembly 2323, and the detection assembly 24. The processor 25 may be configured to execute any one of the above control methods for the beverage dispensing device 20.

The instruction receiving assembly 21 may receive the user instruction. The moving assembly 2323 may control the beverage outlet 22 to ascend or descend. The detection assembly 24 may move synchronously with the beverage outlet 22. The detection assembly 24 may emit the first detection wave and receive an echo of the first detection wave to detect the opening edge of the container 26 and the detection information in the container 26. The detection information may include the first information and the second information. In a case where the detection assembly 24 is located at a suitable position where the detection assembly 24 may detect the opening edge of the container 26 and the detection information in the container 26, the beverage outlet 22 may be controlled to dispense the first type of beverage ingredient and/or the second type of beverage ingredient. During the dispensing of the first type of beverage ingredient and/or the second type of beverage ingredient by the beverage dispensing device 20, in a case where the detection information of the first type of beverage ingredient in the container 26 meets the preset condition, the dispensing of the first type of beverage ingredient and/or the second type of beverage ingredient may be automatically stopped, so as to reduce splashing of the first type of beverage ingredient and/or the second type of beverage ingredient.

The instruction receiving assembly 21 may include a button, a knob, a microphone, a camera, or an input area of a display screen disposed on the beverage dispensing device 20. Alternatively, the beverage dispensing device 20 may be configured to be connected to a user's client by wire or wirelessly, and the instruction receiving assembly 21 may include an antenna or a connector disposed on the beverage dispensing device 20, or a button, a knob, a microphone, a camera, or an input area of a display screen disposed on the client.

The processor 25 may be an operating and control core, and may be an execution unit configured to process information and run a program.

Based on the embodiments of the present disclosure, as shown in FIG. 24, the beverage dispensing device 20 may further include the carrying platform 27. The carrying platform 27 may be configured to carry the container 26. The beverage outlet 22 may be located above the carrying platform 27. The beverage outlet 22 may be defined with a movement track. The movement track may include the first end a away from the carrying platform 27 and the second end b close to the carrying platform 27. The container 26 may be placed on the carrying platform 27. The beverage outlet 22 may move down toward the carrying platform 27. The initial position of the beverage outlet 22 may be the first end a. An end after the beverage outlet 22 reaches the lowest limit position may be the second end b.

Based on the embodiments of the present disclosure, the detection assembly 24 may include the first sensing assembly 241. The first sensing assembly 241 may be located above the carrying platform 27. The first sensing assembly 241 may be relatively fixed to the beverage outlet 22. The first sensing assembly 241 may be connected to the processor 25. The first sensing assembly 241 may be configured to move synchronously with the beverage outlet 22. The first sensing assembly 241 may be located above the carrying platform 27, and the first sensing assembly 241 may be configured to move synchronously with the beverage outlet 22, emit the first detection wave, and receive an echo of the first detection wave.

Based on the embodiments of the present disclosure, the first sensing assembly 241 may include an ultrasonic detector or a time-of-flight (TOF) detector.

Based on the embodiments of the present disclosure, the first sensing assembly 241 may be configured to detect the opening edge of the container 26 and the detection information in the container 26. The detection information may include the first information and the second information. The first information may be information about the top of the first type of beverage ingredient. The second information may be information about the liquid level of the second type of beverage ingredient. In a case where the first sensing assembly 241 is located at a suitable position where the first sensing assembly 241 may detect the opening edge of the container 26 and the detection information in the container 26, the beverage outlet 22 may be controlled to dispense the first type of beverage ingredient and/or the second type of beverage ingredient. During the dispensing of the first type of beverage ingredient and/or the second type of beverage ingredient by the beverage dispensing device 20, in a case where the detection information in the container 26 meets the preset condition, the dispensing of the first type of beverage ingredient and/or the second type of beverage ingredient may be automatically stopped, so as to reduce splashing of the first type of beverage ingredient and/or the second type of beverage ingredient.

Based on the embodiments of the present disclosure, as shown in FIG. 23, the detection assembly 24 may further include the second sensing assembly 242. The second sensing assembly 242 may be located above the carrying platform 27. The second sensing assembly 242 may be relatively fixed to the beverage outlet 22. The second sensing assembly 242 may be configured to move synchronously with the beverage outlet 22. The second sensing assembly 242 may include the triggering portion 2421 and the microswitch 2422. The triggering portion 2421 may be configured to trigger the microswitch 2422 when touching the opening edge of the container 26. The microswitch 2422 may be connected to the processor 25. The triggering portion 2421 may be protrudingly disposed toward the container 26 relative to the beverage outlet 22. In a case where the beverage outlet 22 moves downward, the triggering portion 2421 may be configured to trigger the microswitch 2422 when touching the opening edge of the container 26.

Based on the embodiments of the present disclosure, the second sensing assembly 242 may be configured to detect the opening edge of the container 26, and the first sensing assembly 241 may be configured to detect the detection information in the container 26. The second sensing assembly 242 may be configured to detect the opening edge of the container 26, and in a case where the triggering portion 2421 of the second sensing assembly 242 triggers the microswitch 2422, it may indicate that the triggering portion 2421 abuts against the opening edge of the container 26. At this time, the beverage outlet 22 may be stopped from moving downward, and the first type of beverage ingredient and/or the second type of beverage ingredient may be dispensed into the beverage-receiving container 26 based on the user instruction. In a case where the first sensing assembly 241 detects that the detection information in the container 26 meets the preset condition, the dispensing of the first type of beverage ingredient and/or the second type of beverage ingredient may be stopped.

Based on the embodiments of the present disclosure, as shown in FIG. 15 and FIG. 23, the detection assembly 24 may further include the third sensing assembly 243. The third sensing assembly 243 may be configured to move synchronously with the beverage outlet 22. The two sides of the carrying platform 27 of the beverage dispensing device 20 may include the first side wall 271 and the second side wall 272 arranged opposite to each other. The third sensing assembly 243 may include the second transmitting portion 2431 and the second receiving portion 2432 arranged opposite to each other. The second transmitting portion 2431 may be movably disposed on the first side wall 271. The second receiving portion 2432 may be movably disposed on the second side wall 272. The third sensing assembly 243 may be connected to the processor 25. In a case where the beverage outlet 22 moves downward, the second transmitting portion 2431 and the second receiving portion 2432 of the third sensing assembly 243 arranged oppositely may move downward synchronously. The second transmitting portion 2431 may emit the second detection wave, and whether the second receiving portion 2432 receives the second detection wave may be determined. In response to the second receiving portion 2432 not receiving the second detection wave, it may indicate that the third sensing assembly 243 detects the opening edge of the container 26, indicating that the beverage outlet 22 has reached the target position. At this time, the beverage outlet 22 may be stopped from moving downward, and the first type of beverage ingredient and/or the second type of beverage ingredient may be dispensed into the container 26 based on the user instruction.

The second transmitting portion 2431 being movably disposed on the first side wall 271 may mean that the second transmitting portion 2431 is directly movably connected to the first side wall 271, or that the second transmitting portion 2431 is movably located on a side of the first side wall 271 facing the carrying platform 27 or a side away from the carrying platform 27. The second receiving portion 2432 being movably disposed on the second side wall 272 may mean that the second receiving portion 2432 is directly movably connected to the second side wall 272, or that the second receiving portion 2432 is movably located on a side of the second side wall 272 facing the carrying platform 27 or a side away from the carrying platform 27.

Based on the embodiments of the present disclosure, the third sensing assembly may include an infrared pair tube.

Based on the embodiments of the present disclosure, the third sensing assembly 243 may be configured to detect the opening edge of the container 26, and the first sensing assembly 241 may be configured to detect the detection information in the container 26. The detection information may include the first information and the second information. In a case where the third sensing assembly 243 detects the opening edge of the container 26, it may indicate that the beverage outlet 22 has reached the target position. In a case where the first sensing assembly 241 detects that the detection information in the container 26 meets the preset condition, the dispensing of the first type of beverage ingredient and/or the second type of beverage ingredient may be stopped.

Based on the embodiments of the present disclosure, the detection assembly 24 may include the fourth sensing assembly 244. The fourth sensing assembly 244 may be located above the carrying platform 27. The fourth sensing assembly 244 may be configured to detect the opening edge of the container 26 and the detection information in the container 26 through image information. The fourth sensing assembly 244 may be connected to the processor 25. In the embodiments, the beverage dispensing device 20 may include the fourth sensing assembly 244. The fourth sensing assembly 244 may determine whether the beverage outlet 22 has moved down to the target position via the obtained image information, and feedback the detection information based on the image information in real time. In a case where the detection information meets the preset condition, the dispensing of the first type of beverage ingredient and/or the second type of beverage ingredient may be stopped.

Based on the embodiments of the present disclosure, the fourth sensing assembly 244 may include a camera.

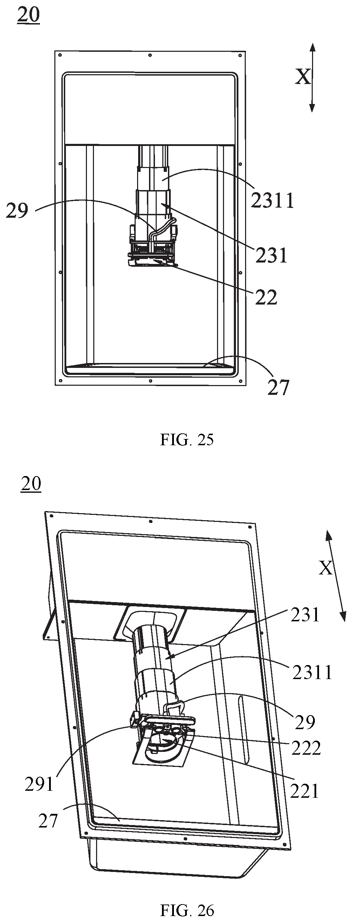

Based on the embodiments of the present disclosure, as shown in FIG. 25, FIG. 26, and FIG. 27, the beverage dispensing device 20 may include a first sleeve group 231. The first sleeve group 231 may include a plurality of first sleeves 2311 sleeved in a hierarchical manner. An innermost first sleeve 2311 may be fixedly disposed at the first end a. The other first sleeves 2311 may be relatively movable along a first direction X to achieve telescopic movement. The first direction X may be a direction close to or away from the container 26. The first sleeve 2311 fixedly disposed at the first end a may be a first fixed sleeve. The first sleeve 2311 farthest from the first fixed sleeve in the first sleeve group 231 may be a first moving sleeve. The first moving sleeve may also be an outermost first sleeve 2311 in the first sleeve group 231. The beverage outlet 22 may be located on the first moving sleeve. The first sleeve group 231 of the embodiments may be in a form of being small at the top and large at the bottom. That is, the innermost first sleeve 2311 may be fixedly disposed at the first end a, and the other first sleeves 2311 may be sleeved outside the innermost first sleeve 2311 in a hierarchical manner and relatively movable along the first direction X to achieve extension and retraction. The plurality of first sleeves 2311 may be relatively movable along the first direction X to achieve extension and retraction, and the innermost first sleeve 2311 may be fixedly disposed at the first end a. Therefore, during the dispensing of the first type of beverage ingredient and/or the second type of beverage ingredient, the first moving sleeve may extend toward the second end b close to the container 26. The first moving sleeve may drive the other first sleeves 2311 between the first fixed sleeve and the first moving sleeve to extend toward the second end b close to the container 26. Thus, splashing may be reduced during the dispensing of the first type of beverage ingredient and/or the second type of beverage ingredient. After the dispensing of the first type of beverage ingredient and/or the second type of beverage ingredient is completed, the first moving sleeve may retract from the second end b close to the container 26 toward the first end a away from the container 26, and then may drive the other first sleeves 2311 between the first fixed sleeve and the first moving sleeve to retract toward the first end a away from the container 26. Therefore, when obtaining the first type of beverage ingredient and/or the second type of beverage ingredient, the user's hand may be prevented from touching the beverage outlet 22, which could otherwise affect the user experience. Since the innermost first sleeve 2311 may be fixed at the first end a, during the extension and retraction of the first sleeve group 231, the first sleeve group 231 may remain relatively fixed with the first end a away from the container 26, and thus the entire extension and retraction process may be more stable. Therefore, the arrangement of the structure may facilitate the user to obtain the first type of beverage ingredient and/or the second type of beverage ingredient through the extension and retraction of the first sleeve group 231, so as to reduce splashing of the first type of beverage ingredient and/or the second type of beverage ingredient, which may affect the user experience.

Based on the embodiments of the present disclosure, the first sleeve group 231 may be defined with a delivery channel (not shown). A bottom of the first moving sleeve may be defined with a first type of beverage ingredient outlet 221. The beverage outlet 22 may include the first type of beverage ingredient outlet 221, and the first type of beverage ingredient outlet 221 may be defined at the bottom of the first moving sleeve. In a case where the user obtains the first type of beverage ingredient, the first type of beverage ingredient may move from the delivery channel toward the first type of beverage ingredient outlet 221 and be dispensed from the outlet. The delivery channel defined in the first sleeve group 231 with a hollow internal structure may facilitate the dispensing of the first type of beverage ingredient during a process of the user obtaining the first type of beverage ingredient, and may make the dispensing process of the first type of beverage ingredient smoother.

Based on the embodiments of the present disclosure, in a case where the first sleeve group 231 is in an extended state, an inner diameter of the delivery channel may gradually increase in a direction close to the beverage outlet 22. The gradual increase in the inner diameter of the delivery channel may prevent the first type of beverage ingredient from jamming.

Based on the embodiments of the present disclosure, the beverage dispensing device 20 may further include a second sleeve group 232. The second sleeve group 232 may be sleeved outside the first sleeve group 231. The second sleeve group 232 may include a plurality of second sleeves 2322 sleeved in a hierarchical manner. An outermost second sleeve 2322 or an innermost second sleeve 2322 may be fixedly disposed at the first end a, and the other second sleeves 2322 may be relatively movable along the first direction X to achieve extension and retraction. The first direction X may be a direction close to or away from the container 26. The second sleeve 2322 fixedly disposed at the first end a may be a second fixed sleeve, and the second sleeve 2322 farthest from the second fixed sleeve in the second sleeve group 232 may be a second moving sleeve. The second moving sleeve may be relatively fixed to the first moving sleeve in the first sleeve group 231. In a case where the outermost second sleeve 2322 is fixedly disposed at the first end a, the second sleeve group 232 may be in a form of being large at the top and small at the bottom. In a case where the innermost second sleeve 2322 is fixedly disposed at the first end a, the second sleeve group 232 may be in a form of being small at the top and large at the bottom. During the process of the user obtaining the first type of beverage ingredient and/or the second type of beverage ingredient, since the second fixed sleeve may be fixedly disposed at the first end a, and a second sleeve 2322 farthest from the second fixed sleeve, i.e., the second moving sleeve, may be relatively fixed to the first moving sleeve, as the first moving sleeve extends toward the end close to the container 26, the first moving sleeve may drive the second moving sleeve to extend toward the end close to the container 26. Since the plurality of second sleeves 2322 may be sleeved in a hierarchical manner, the other second sleeves 2322 may also extend toward the end close to the container 26. In a case where both the second sleeve group 232 and the first sleeve group 231 extend toward the second end b, a distance between the first sleeve group 231 and the second sleeve group 232 and the container 26 may be reduced. Further, during the dispensing of the first type of beverage ingredient and/or the second type of beverage ingredient, the first type of beverage ingredient and/or the second type of beverage ingredient may not splash around, and the user experience may be better. Furthermore, since the second fixed sleeve may be fixedly disposed at the first end a, the second sleeve group 232 may be more stable during the extension and retraction process of the second sleeve group 232.

Based on the embodiments of the present disclosure, in order to allow the second type of beverage ingredient to be dispensed from the beverage outlet 22, the beverage outlet 22 may further include a second type of beverage ingredient outlet 222. The beverage dispensing device 20 may further include a delivery pipe 29. The output end 291 of the delivery pipe 29 may form the second type of beverage ingredient outlet 222, and the output end 291 may be relatively fixed to the first moving sleeve or the second moving sleeve. During a process of the user obtaining the second type of beverage ingredient, the second type of beverage ingredient may flow within the delivery pipe 29. In a case where the second type of beverage ingredient flows to the output end 291 of the delivery pipe 29, the second type of beverage ingredient may be dispensed from the second type of beverage ingredient outlet 222. Since the output end 291 may be relatively fixed to the first moving sleeve or the second moving sleeve, when the user obtains the second type of beverage ingredient, the first moving sleeve or the second moving sleeve may extend toward the end close to the container 26, and thus the output end 291 may be close to the container 26, so that the second type of beverage ingredient may not splash around when flowing into the container 26, thereby improving the user operational experience. The delivery pipe 29 may be disposed between the first sleeve group 231 and the second sleeve group 232. The second sleeve group 232 may play a certain shielding and protective role for the first sleeve group 231 and other structural assemblies such as the delivery pipe 29 located outside the first sleeve group 231, making the overall appearance more aesthetically pleasing and prolonging the service life of the first sleeve group 231, the delivery pipe 29, and other structures.

In other embodiments, the delivery pipe 29 may be disposed in the delivery channel formed in the first sleeve group 231. The second type of beverage ingredient outlet 222 defined by the output end 291 of the delivery pipe 29 may be embedded in the first type of beverage ingredient outlet 221.

The innermost first sleeve 2311 of the above-mentioned first sleeve group 231 may be relatively fixed to the first end a, and the other first sleeves 2311 may be relatively movable along the direction close to or away from the container 26 to achieve extension and retraction. The first sleeve group 231 may be of a structure that is small at the top and large at the bottom.

The following lists a case where the first sleeve group 231 is of a structure that is large at the top and small at the bottom.

Based on the embodiments of the present disclosure, the beverage dispensing device 20 may include the first sleeve group 231. The first sleeve group 231 may include a plurality of first sleeves 2311 sleeved in a hierarchical manner. The outermost first sleeve 2311 may be fixedly disposed at the first end a. The other first sleeves 2311 may be relatively movable along the first direction X to achieve extension and retraction. The first direction X may be a direction close to or away from the container 26. The outermost first sleeve 2311 fixedly disposed at the first end a may be the first fixed sleeve. The first sleeve 2311 farthest from the first fixed sleeve in the first sleeve group 231 may be the first moving sleeve. The first moving sleeve may also be the innermost first sleeve 2311 in the first sleeve group 231. The beverage outlet 22 may be located on the second moving sleeve. The first sleeve group 231 of the embodiments may be in a form of being large at the top and small at the bottom. That is, the outermost first sleeve 2311 may be fixedly disposed at the first end a, and the other first sleeves 2311 may be embedded in the outermost first sleeve 2311 in a hierarchical manner and relatively movable along the first direction X to achieve extension and retraction. The plurality of first sleeves 2311 may be relatively movable along the first direction X to achieve extension and retraction, and the outermost first sleeve 2311 may be fixedly disposed at the first end a. Therefore, during the dispensing of the first type of beverage ingredient and/or the second type of beverage ingredient, the first moving sleeve may extend toward the second end b close to the container 26. The first moving sleeve may drive the other first sleeves 2311 between the first fixed sleeve and the first moving sleeve to extend toward the second end b close to the container 26. Thus, splashing may be reduced during the dispensing of the first type of beverage ingredient and/or the second type of beverage ingredient. After the dispensing of the first type of beverage ingredient and/or the second type of beverage ingredient is completed, the first moving sleeve may retract from the second end b close to the container 26 toward the first end a away from the container 26, and then may drive the other first sleeves 2311 between the first fixed sleeve and the first moving sleeve to retract toward the first end a away from the container 26. Therefore, when obtaining the first type of beverage ingredient and/or the second type of beverage ingredient, the user's hand may be prevented from touching the beverage outlet 22, which could otherwise affect the user experience. Since the first fixed sleeve may be fixed at the first end a, during the extension and retraction of the first sleeve group 231, the first sleeve group 231 may remain relatively fixed with the first end a away from the container 26, and thus the entire extension and retraction process may be more stable. Therefore, the arrangement of this structure may facilitate the user to obtain the first type of beverage ingredient and/or the second type of beverage ingredient through the extension and retraction of the first sleeve group 231, so as to reduce splashing of the first type of beverage ingredient and/or the second type of beverage ingredient, which may affect the user experience.

Based on the embodiments of the present disclosure, the first sleeve group 231 may be defined with the delivery channel (not shown). The bottom of the first moving sleeve may be defined with the first type of beverage ingredient outlet 221. In a case where the user obtains the first type of beverage ingredient, the first type of beverage ingredient may move from the delivery channel toward the first type of beverage ingredient outlet 221 and be dispensed from the outlet. The delivery channel defined in the first sleeve group 231 with a hollow internal structure may facilitate the dispensing of the first type of beverage ingredient during a process of the user obtaining the first type of beverage ingredient, and may make the dispensing process of the first type of beverage ingredient smoother.

Based on the embodiments of the present disclosure, in a case where the first sleeve group 231 is in an extended state, the inner diameter of the delivery channel may gradually decrease in the direction close to the beverage outlet 22. The gradual decrease in the inner diameter of the delivery channel may converge a delivery path of the first type of beverage ingredient.

Based on the embodiments of the present disclosure, the beverage dispensing device 20 may further include the second sleeve group 232. The second sleeve group 232 may be sleeved outside the first sleeve group 231. The second sleeve group 232 may include a plurality of second sleeves 2322 sleeved in a hierarchical manner. The outermost second sleeve 2322 or the innermost second sleeve 2322 may be fixedly disposed at the first end a. The second sleeve 2322 fixedly disposed at the first end a may be the second fixed sleeve, and the second sleeve 2322 farthest from the second fixed sleeve in the second sleeve group 232 may be the second moving sleeve. The second moving sleeve may be relatively fixed to the first moving sleeve in the first sleeve group 231. In a case where the outermost second sleeve 2322 is fixedly disposed at the first end a, the second sleeve group 232 may be in the form of being large at the top and small at the bottom. In a case where the innermost second sleeve 2322 is fixedly disposed at the first end a, the second sleeve group 232 may be in the form of being small at the top and large at the bottom. During the process of the user obtaining the first type of beverage ingredient and/or the second type of beverage ingredient, since the second fixed sleeve may be fixedly disposed at the first end a, and the second sleeve 2322 farthest from the second fixed sleeve, i.e., the second moving sleeve, may be relatively fixed to the first moving sleeve, as the first moving sleeve extends toward the end close to the container 26, the first moving sleeve may drive the second moving sleeve to extend toward the end close to the container 26. Since the plurality of second sleeves 2322 may be sleeved in a hierarchical manner, the other second sleeves 2322 may also extend toward the end close to the container 26. In a case where both the second sleeve group 232 and the first sleeve group 231 extend toward the second end b, a distance between the first sleeve group 231 and the second sleeve group 232 and the container 26 may be reduced. Further, during the dispensing of the first type of beverage ingredient and/or the second type of beverage ingredient, the first type of beverage ingredient and/or the second type of beverage ingredient may not splash around, and the user experience may be better. Furthermore, since the second fixed sleeve may be fixedly disposed at the first end a, the second sleeve group 232 may be more stable during the extension and retraction process of the second sleeve group 232.

Based on the embodiments of the present disclosure, the first sleeves 2311 and the second sleeves 2322 may be in one-to-one correspondence and relatively fixed. In some embodiments, the first sleeves 2311 and the second sleeves 2322 may be connected in one-to-one correspondence by adding a connecting piece.

Based on the embodiments of the present disclosure, in order to allow the second type of beverage ingredient to be dispensed from the beverage outlet 22, the beverage outlet 22 may further include the second type of beverage ingredient outlet 222. The beverage dispensing device 20 may further include the delivery pipe 29. The output end 291 of the delivery pipe 29 may form the second type of beverage ingredient outlet 222, and the output end 291 may be relatively fixed to the first moving sleeve or the second moving sleeve. During the process of the user obtaining the second type of beverage ingredient, the second type of beverage ingredient may flow within the delivery pipe 29. In a case where the second type of beverage ingredient flows to the output end 291 of the delivery pipe 29, the second type of beverage ingredient may be dispensed from the second type of beverage ingredient outlet 222. Since the output end 291 may be relatively fixed to the first moving sleeve or the second moving sleeve, when the user obtains the second type of beverage ingredient, the first moving sleeve or the second moving sleeve may extend toward the end close to the container 26, and thus the output end 291 may be close to the container 26, so that the second type of beverage ingredient may not splash around when flowing into the container 26, thereby improving the user operational experience. The delivery pipe 29 may be disposed between the first sleeve group 231 and the second sleeve group 232. The second sleeve group 232 may play a certain shielding and protective role for the first sleeve group 231 and other structural assemblies such as the delivery pipe 29 located outside the first sleeve group 231, making the overall appearance more aesthetically pleasing and prolonging the service life of the first sleeve group 231, the delivery pipe 29, and other structures.

Based on the embodiments of the present disclosure, the beverage dispensing device 20 may further include the water receiving box 28 and the prompt assembly 282. The water receiving box 28 may be disposed with the water level sensor 281. The water level sensor 281 and the prompt assembly 282 may be connected to the processor 25. The water receiving box 28 may be located under the carrying platform 27. The prompt assembly 282 may be configured to output prompt information. In order to avoid situations such as the user temporarily taking away the container 26, moving the container 26, or replacing the container 26, which may easily cause the first type of beverage ingredient and/or the second type of beverage ingredient dispensed from the beverage outlet 22 to fill the water receiving box 28 and thus cause the overflow of the second type of beverage ingredient, the water level sensor 281 may be disposed to detect the water level in the water receiving box 28, so as to determine whether it is necessary to remind the user to clean the water receiving box 28.

In a case where the water level sensor 281 determines that the water level in the water receiving box 28 reaches the preset water level based on the obtained detection signal, it may indicate that if the first type of beverage ingredient and/or the second type of beverage ingredient enters the water receiving box 28, the second type of beverage ingredient in the water receiving box 28 may overflow. Therefore, the beverage dispensing device 20 may not dispense the first type of beverage ingredient and/or the second type of beverage ingredient, and the prompt assembly 282 may remind the user to clean the water receiving box 28 in a timely manner.

The prompt assembly 282 may include a display screen, an LED light, a sound box, a vibrator, etc. The prompt information may include text or an image displayed by the display screen; a light emitted or flashed by the LED light; a sound played by the sound box; a vibration generated by the vibrator, etc.

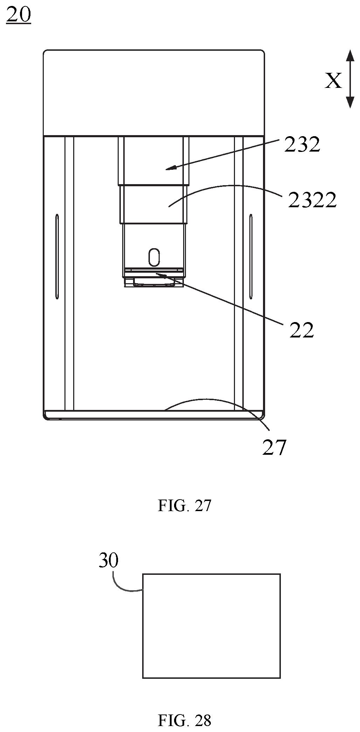

In order to solve the above technical problem, as shown in FIG. 28, the present disclosure may further provide a storage medium 30. The storage medium 30 may be configured to store a program instruction 31. The program instruction 31 may be configured to be executed to implement any one of the above control methods for the beverage dispensing device 20.

In the several embodiments provided in the present disclosure, it should be understood that the disclosed methods and devices may be implemented in other ways. For example, the device embodiments described above may only be illustrative. For example, the division of modules or units may only be a logical function division. In actual implementation, there may be other division methods. For example, units or assemblies may be combined or integrated into another system, or some features may be ignored or not implemented. In addition, the mutual coupling, direct coupling, or communication connection shown or discussed may be indirect coupling or communication connection through some interfaces, devices, or units, or in electrical, mechanical, or other forms.

An unit described as a separate assembly may or may not be physically separated, and an assembly shown as the unit may or may not be a physical unit. That is, the unit may be located in one place, or may be distributed on multiple network units. Some or all of the units may be selected based on actual needs to achieve the purpose of the solution of the embodiments.

In addition, each functional unit in each embodiment of the present disclosure may be integrated into one processing unit, or each unit may exist physically separately, or two or more units may be integrated into one unit. The above-mentioned integrated unit may be implemented in a form of hardware or may be implemented in a form of a software functional unit.

In a case where the integrated unit is implemented in the form of a software functional unit and sold or used as an independent product, the integrated unit may be stored on a computerreadable storage medium 30. Based on such understanding, the technical solution of the present disclosure, essentially, a part that makes contributions to the related art, or all or part of the technical solution, may be embodied in the form of a software product. The computer software product may be stored on the storage medium 30 and may include a plurality of instructions to enable a computer device (which may be a personal computer, a server, or a network device, etc.) or the processor 25 to execute all or part of the operations of the methods in each embodiment of the present disclosure. The aforementioned storage medium 30 may include a USB flash drive, a mobile hard disk, a read-only memory (ROM), a random access memory (RAM), a magnetic disk, an optical disk, or other various media that may store program codes.

The terms "first", "second", and "third" in the present disclosure may only be used for descriptive purposes and may not be understood as indicating or implying the quantity of the indicated technical features. Thus, the features defined with the terms "first", "second", and "third" may explicitly or implicitly include at least one of the features. All directional indicators (such as up, down, left, right, front, back, ...) in the embodiments of the present disclosure may only be used to explain a relative positional relationship, movement situation, etc. between assemblies in a specific posture (as shown in the accompanying drawings). In a case where the specific posture changes, the directional indicator may also change accordingly. In addition, the terms "include" and "have" and any variations thereof may be intended to cover non-exclusive inclusion. For example, a process, method, system, product, or device that includes a series of operations or units may not be limited to the listed operations or units, but may optionally include other unlisted operations or units, or optionally include other operations or units inherent to the process, method, product, or device.

The above descriptions may only be embodiments of the present disclosure, and may not be intended to limit the scope of the present disclosure. Any equivalent structures or equivalent process transformations made based on the content of the specification and drawings of the present disclosure, or directly or indirectly applied to other related technical fields, shall similarly be included in the scope of patent protection of the present disclosure.

## Claims

1. A control method for a beverage dispensing device, comprising:
receiving a user instruction, the user instruction comprising a first instruction, a second instruction, and a third instruction, the first instruction being an instruction to dispense a first type of beverage ingredient, the second instruction being an instruction to dispense a second type of beverage ingredient, and the third instruction being an instruction to dispense the first type of beverage ingredient and the second type of beverage ingredient;
moving a beverage outlet downward from an initial position;
determining whether the beverage outlet has reached a target position during moving downward;
stopping, in response to the beverage outlet having reached the target position, the beverage outlet from moving downward; and
dispensing, in response to the beverage outlet being stopped from moving downward, the first type of beverage ingredient and/or the second type of beverage ingredient into a beverage-receiving container based on the user instruction, and stopping, in response to detected detection information meeting a preset condition, the dispensing of the first type of beverage ingredient and/or the second type of beverage ingredient.

2. The control method for the beverage dispensing device as claimed in claim 1, wherein the beverage dispensing device comprises a carrying platform configured to carry the container, the beverage outlet is located above the carrying platform, the beverage outlet is defined with a movement track, the movement track comprises a first end away from the carrying platform and a second end close to the carrying platform, the initial position is located at the first end, and in a case where the beverage outlet moves downward from the initial position, the beverage outlet moves from the first end towards the second end.

3. The control method for the beverage dispensing device as claimed in claim 2, wherein:
the beverage dispensing device comprises a first sensing assembly located above the carrying platform, and the first sensing assembly is relatively fixed to the beverage outlet and configured to move synchronously with the beverage outlet; and
said determining whether the beverage outlet has reached the target position during moving downward, comprises:
emitting a first detection wave by the first sensing assembly;
determining whether the first sensing assembly receives an echo of the first detection wave within a first preset time period;
stopping, in response to the first sensing assembly receiving an echo of the first detection wave within the first preset time period, the beverage outlet from moving downward;
maintaining, in response to the first sensing assembly not receiving an echo of the first detection wave within the first preset time period, a state of the beverage outlet moving downward, and returning to emit the first detection wave by the first sensing assembly.

4. The control method for the beverage dispensing device as claimed in claim 3, wherein said maintaining the state of the beverage outlet moving downward and emitting the first detection wave by the first sensing assembly, comprises:
maintaining the state of the beverage outlet moving downward;
determining whether a time difference between a time point when the first detection wave was last emitted and a current time point reaches a second preset time period, the second preset time period being greater than or equal to the first preset time period;
returning, in response to the time difference between the time point when the first detection wave was last emitted and the current time point reaching the second preset time period, to emit the first detection wave by the first sensing assembly;
returning, in response to the time difference between the time point when the first detection wave was last emitted and the current time point not reaching the second preset time period, to determine whether the time difference between the time point when the first detection wave was last emitted and the current time point reaches the second preset time period.

5. The control method for the beverage dispensing device as claimed in claim 4, wherein the second preset time period is greater than or equal to a value obtained by dividing 2N times a distance between the initial position and the carrying platform by a speed of sound, and N ranges from 1 to 1000.

6. The control method for the beverage dispensing device as claimed in claim 2, wherein:
the beverage dispensing device comprises a second sensing assembly located above the carrying platform, the second sensing assembly is relatively fixed to the beverage outlet and configured to move synchronously with the beverage outlet, the second sensing assembly comprises a triggering portion and a microswitch, and the triggering portion is configured to trigger the microswitch when touching an opening edge of the container; and
said determining whether the beverage outlet has reached the target position during moving downward, comprises:
determining whether the triggering portion triggers the microswitch;
stopping, in response to the triggering portion triggering the microswitch, the beverage outlet from moving downward;
maintaining, in response to the triggering portion not triggering the microswitch, the state of the beverage outlet moving downward, and returning to determine whether the triggering portion triggers the microswitch.

7. The control method for the beverage dispensing device as claimed in claim 2, wherein:
the beverage dispensing device comprises a third sensing assembly configured to move synchronously with the beverage outlet, two sides of the carrying platform of the beverage dispensing device comprise a first side wall and a second side wall arranged opposite to each other, the third sensing assembly comprises a second transmitting portion and a second receiving portion arranged opposite to each other, the second transmitting portion is movably disposed on the first side wall, and the second receiving portion is movably disposed on the second side wall; and
said determining whether the beverage outlet has reached the target position during moving downward, comprises:
emitting a second detection wave by the second transmitting portion;
determining whether the second receiving portion receives the second detection wave;
maintaining, in response to the second receiving portion receiving the second detection wave, the state of the beverage outlet moving downward, and returning to emit the second detection wave by the second transmitting portion;
stopping, in response to the second receiving portion not receiving the second detection wave, the beverage outlet from moving downward.

8. The control method for the beverage dispensing device as claimed in claim 2, wherein the beverage dispensing device comprises a fourth sensing assembly located above the carrying platform, and the fourth sensing assembly is configured to determine whether the beverage outlet has moved down to the target position through image information and to detect the detection information.

9. The control method for the beverage dispensing device as claimed in claim 2, wherein said determining whether the beverage outlet has reached the target position during moving downward, further comprises:
determining, in response to the beverage outlet not having reached the target position during moving downward, whether the beverage outlet has reached the second end;
stopping, in response to the beverage outlet having reached the second end, the beverage outlet from moving downward;
maintaining, in response to the beverage outlet not having reached the second end, the state of the beverage outlet moving downward, and returning to determine whether the beverage outlet has reached the target position.

10. The control method for the beverage dispensing device as claimed in any one of claims 1-9, wherein the target position comprises a position where a vertical distance between the beverage outlet and an opening edge of the container ranges from 0 cm to 60 cm.

11. The control method for the beverage dispensing device as claimed in claim 1, wherein:
the detection information comprises first information and/or second information; and
said dispensing the first type of beverage ingredient and/or the second type of beverage ingredient into the beverage-receiving container based on the user instruction, and stopping, in response to detected detection information meeting the preset condition, the dispensing of the first type of beverage ingredient and/or the second type of beverage ingredient, comprises:
dispensing, in response to the user instruction being the first instruction, the first type of beverage ingredient based on the user instruction, and stopping, in response to detecting that the first information in the container meets a first preset condition, the dispensing of the first type of beverage ingredient; or
dispensing, in response to the user instruction being the second instruction, the second type of beverage ingredient based on the user instruction, and stopping, in response to detecting that the second information in the container meets a second preset condition, the dispensing of the second type of beverage ingredient; or
dispensing, in response to the user instruction being the third instruction, the first type of beverage ingredient based on the user instruction, and stopping, in response to detecting that the first information in the container meets the first preset condition, the dispensing of the first type of beverage ingredient; dispensing the second type of beverage ingredient based on the user instruction, and stopping, in response to detecting that the second information in the container meets the second preset condition, the dispensing of the second type of beverage ingredient.

12. The control method for the beverage dispensing device as claimed in claim 11, wherein the first information is a vertical distance between an opening edge of the container and a top of the first type of beverage ingredient, and the first preset condition is that the vertical distance between the opening edge of the container and the top of the first type of beverage ingredient is less than or equal to a first preset value; the second information is a vertical distance between the opening edge of the container and a liquid level of the second type of beverage ingredient, and the second preset condition is that the vertical distance between the opening edge of the container and the liquid level of the second type of beverage ingredient is less than or equal to a second preset value; the first preset value is greater than the second preset value.

13. The control method for the beverage dispensing device as claimed in claim 2, wherein:
the beverage dispensing device further comprises a water receiving box and a prompt assembly, the water receiving box is disposed with a water level sensor, the water receiving box is located under the carrying platform, and the prompt assembly is configured to output prompt information; and
the control method further comprises:
determining, in response to the beverage outlet being stopped from moving downward, whether a water level in the water receiving box reaches a preset water level based on a detection signal obtained by the water level sensor;
outputting, in response to the water level in the water receiving box reaching the preset water level, the prompt information by the prompt assembly;
dispensing, in response to the water level in the water receiving box not reaching the preset water level, the first type of beverage ingredient and/or the second type of beverage ingredient into the beverage-receiving container based on the user instruction, and continuously determining whether the water level in the water receiving box reaches the preset water level based on the detection signal obtained by the water level sensor; stopping, in response to the water level in the water receiving box reaching the preset water level, the dispensing of the first type of beverage ingredient and/or the second type of beverage ingredient, and outputting the prompt information; or
the control method further comprises:
determining, in response to receiving the user instruction, whether the water level in the water receiving box reaches the preset water level based on the detection signal obtained by the water level sensor;
outputting, in response to the water level in the water receiving box reaching the preset water level, the prompt information by the prompt assembly;
moving, in response to the water level in the water receiving box not reaching the preset water level, the beverage outlet downward from the initial position.

14. The control method for the beverage dispensing device as claimed in claim 13, further comprising: controlling, in response to stopping the dispensing of the first type of beverage ingredient and/or the second type of beverage ingredient, the beverage outlet to move toward the initial position.

15. The control method for the beverage dispensing device as claimed in claim 2, further comprising:
determining, in response to receiving the user instruction, whether a presence of the container is detected on the carrying platform;
moving, in response to the presence of the container being detected on the carrying platform, the beverage outlet downward from the initial position;
stopping, in response to the presence of the container not being detected on the carrying platform, the beverage outlet from moving.

16. The control method for the beverage dispensing device as claimed in claim 1, wherein the detection information comprises a vertical distance between a top of a receiving object in the container and an opening edge of the container.

17. A beverage dispensing device, comprising:
an instruction receiving assembly, configured to receive a user instruction, the user instruction comprising a first instruction, a second instruction, and a third instruction, the first instruction being an instruction to dispense a first type of beverage ingredient, the second instruction being an instruction to dispense a second type of beverage ingredient, and the third instruction being an instruction to dispense the first type of beverage ingredient and the second type of beverage ingredient;
a beverage outlet, configured to dispense a beverage into a container, the beverage comprising the first type of beverage ingredient and/or the second type of beverage ingredient;
a moving assembly, connected to the beverage outlet and configured to move the beverage outlet;
a detection assembly, configured to detect an opening edge of the container and detection information in the container;
a processor, connected to the instruction receiving assembly, the moving assembly, and the detection assembly, and configured to execute the control method for the beverage dispensing device as claimed in any one of claims 1-16.

18. The beverage dispensing device as claimed in claim 17, further comprising a carrying platform, wherein the carrying platform is configured to carry the container, the beverage outlet is located above the carrying platform, the beverage outlet is defined with a movement track, and the movement track comprises a first end away from the carrying platform and a second end close to the carrying platform.

19. The beverage dispensing device as claimed in claim 18, wherein the detection assembly comprises a first sensing assembly located above the carrying platform, the first sensing assembly is relatively fixed to the beverage outlet and connected to the processor, and the first sensing assembly is configured to move synchronously with the beverage outlet.

20. The beverage dispensing device as claimed in claim 19, wherein the first sensing assembly comprises an ultrasonic detector or a time-of-flight detector.

21. The beverage dispensing device as claimed in any one of claims 18-20, wherein the first sensing assembly is configured to detect the opening edge of the container and the detection information in the container.

22. The beverage dispensing device as claimed in any one of claims 18-20, wherein the detection assembly further comprises a second sensing assembly located above the carrying platform, the second sensing assembly is relatively fixed to the beverage outlet and configured to move synchronously with the beverage outlet, the second sensing assembly comprises a triggering portion and a microswitch, the triggering portion is configured to trigger the microswitch when touching the opening edge of the container, and the microswitch is connected to the processor.

23. The beverage dispensing device as claimed in claim 22, wherein the second sensing assembly is configured to detect the opening edge of the container, and the first sensing assembly is configured to detect the detection information in the container.

24. The beverage dispensing device as claimed in any one of claims 18-20, wherein the detection assembly further comprises a third sensing assembly configured to move synchronously with the beverage outlet, two sides of the carrying platform of the beverage dispensing device comprise a first side wall and a second side wall arranged opposite to each other, the third sensing assembly comprises a second transmitting portion and a second receiving portion arranged opposite to each other, the second transmitting portion is movably disposed on the first side wall, the second receiving portion is movably disposed on the second side wall, and the third sensing assembly is connected to the processor.

25. The beverage dispensing device as claimed in claim 24, wherein the third sensing assembly comprises an infrared pair tube.

26. The beverage dispensing device as claimed in claim 24, wherein the third sensing assembly is configured to detect the opening edge of the container, and the first sensing assembly is configured to detect the detection information in the container.

27. The beverage dispensing device as claimed in claim 18, wherein the detection assembly comprises a fourth sensing assembly located above the carrying platform, the fourth sensing assembly is configured to detect the opening edge of the container and the detection information in the container through image information, and the fourth sensing assembly is connected to the processor.

28. The beverage dispensing device as claimed in claim 27, wherein the fourth sensing assembly comprises a camera.

29. The beverage dispensing device as claimed in claim 18, further comprising: a first sleeve group, comprising at least two first sleeves sleeved in a hierarchical manner, an innermost first sleeve or an outermost first sleeve being fixedly disposed at the first end, and the other first sleeves being relatively movable along a first direction to achieve extension and retraction; a first sleeve fixedly disposed at the first end being a first fixed sleeve, a first sleeve farthest from the first fixed sleeve in the first sleeve group being a first moving sleeve, and the beverage outlet being located on the first moving sleeve; the first direction being a direction close to or away from the container.

30. The beverage dispensing device as claimed in claim 29, wherein the first sleeve group is defined with a delivery channel, and a bottom of the first moving sleeve is defined with a first type of beverage ingredient outlet.

31. The beverage dispensing device as claimed in claim 30, wherein in a case where the first sleeve group is in an extended state, an inner diameter of the delivery channel gradually increases or decreases in a direction close to the beverage outlet.

32. The beverage dispensing device as claimed in any one of claims 29-31, further comprising: a second sleeve group, sleeved outside the first sleeve group, the second sleeve group comprising at least two second sleeves sleeved in a hierarchical manner, an outermost second sleeve or an innermost second sleeve being fixedly disposed at the first end, and the other second sleeves being relatively movably disposed along the first direction; a second sleeve fixedly disposed at the first end being a second fixed sleeve, a second sleeve farthest from the second fixed sleeve in the second sleeve group being a second moving sleeve, and the second moving sleeve being relatively fixed to the first moving sleeve.

33. The beverage dispensing device as claimed in claim 32, wherein the first sleeves and the second sleeves are in one-to-one correspondence and relatively fixed.

34. The beverage dispensing device as claimed in claim 32, wherein the beverage outlet further comprises a second type of beverage ingredient outlet, the beverage dispensing device further comprises a delivery pipe, an output end of the delivery pipe forms the second type of beverage ingredient outlet, and the output end is relatively fixed to the first moving sleeve or the second moving sleeve.

35. The beverage dispensing device as claimed in claim 18, further comprising a water receiving box and a prompt assembly, wherein the water receiving box is disposed with a water level sensor, the water level sensor and the prompt assembly are connected to the processor, the water receiving box is located under the carrying platform, and the prompt assembly is configured to output prompt information.

36. A storage medium, configured to store a program instruction, wherein the program instruction is configured to be executed to implement the control method for the beverage dispensing device as claimed in any one of claims 1-16.
